# EUROPEAN PATENT APPLICATION

(11) **EP 4 819 552 A1**
(43) Date of publication of application: **07.10.2026**
(21) Application number: 24913803.3
(22) Date of filing: 12.12.2024
(51) Int. Cl.: H04L 25/02, H04L 5/00, H04B 17/336

(54) **ELECTRONIC DEVICE AND METHOD FOR ESTIMATING DOPPLER SPREAD IN WIRELESS COMMUNICATION SYSTEM**

(30) Priority: 30.12.2023 KR 20230198043
(71) Applicant: Samsung Electronics Co., Ltd., Suwon-si, Gyeonggi-do 16677 (KR)
(72) Inventor: LEE, Ikbeom, Suwon-si, Gyeonggi-do 16677 (KR)
(74) Representative: HGF
(86) International application number: PCT/KR2024/096874
(87) International publication number: WO 2025/143999

(57) **Abstract**

In embodiments, an electronic device is provided. The electronic device may comprise: at least one processor; and a memory for storing instructions. The instructions, when executed by the at least one processor, may cause the electronic device to: acquire first uplink reference signals in a first symbol; acquire a first channel estimation result for the first symbol by using the first uplink reference signals; acquire second uplink reference signals in a second symbol after the first symbol; determine a first communication quality index using the first uplink reference signals, and the first channel estimation result for the first symbol; determine a second communication quality index using the second uplink reference signals, and the first channel estimation result for the first symbol; and determine Doppler spread information corresponding to the difference between the first communication quality index and the second communication quality index.

## Description

### [Technical Field]

The present disclosure relates to a wireless communication system, and more specifically, the present disclosure relates to an electronic device and a method for estimating Doppler spread in a wireless communication system.

### [Background Art]

In a wireless communication system, a terminal transmitting or receiving a wireless signal may move. Movement of the terminal causes a change of the wireless channel. A communication device providing a network may estimate the change of the channel due to dispersion, spread, fluctuation, and the like on a frequency domain due to movement of the terminal.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise at least one processor, and memory storing instructions. The instructions, when executed by the at least one processor, may cause the electronic device to obtain first uplink reference signals in a first symbol, obtain a first channel estimation result for the first symbol using the first uplink reference signals, obtain second uplink reference signals in a second symbol after the first symbol, determine a first communication quality metric using the first uplink reference signals and the first channel estimation result for the first symbol, determine a second communication quality metric using the second uplink reference signals and the first channel estimation result for the first symbol, and determine Doppler spread information corresponding to a difference between the first communication quality metric and the second communication quality metric.

In embodiments, a method performed by an electronic device is provided. The method may comprise obtaining first uplink reference signals in a first symbol, obtaining a first channel estimation result for the first symbol using the first uplink reference signals, obtaining second uplink reference signals in a second symbol after the first symbol, determining a first communication quality metric using the first uplink reference signals and the first channel estimation result for the first symbol, determining a second communication quality metric using the second uplink reference signals and the first channel estimation result for the first symbol, and determining Doppler spread information corresponding to a difference between the first communication quality metric and the second communication quality metric.

In embodiments, an electronic device is provided. The electronic device may comprise at least one processor, and memory storing instructions. The instructions, when executed by the at least one processor, may cause the electronic device to obtain first uplink reference signals in a first symbol, obtain second uplink reference signals in a second symbol after the first symbol, obtain a channel estimation result for the second symbol using the second uplink reference signals, determine a first communication quality metric using the first uplink reference signals and the channel estimation result, determine a second communication quality metric using the second uplink reference signals and the channel estimation result, and determine Doppler spread information corresponding to a difference between the first communication quality metric and the second communication quality metric.

In embodiments, an electronic device is provided. The electronic device may comprise at least one processor and at least one transceiver. The at least one processor may be configured to obtain first downlink reference signals in a first symbol through the at least one transceiver. The at least one processor may be configured to obtain a first channel estimation result for the first symbol using the first downlink reference signals. The at least one processor may be configured to obtain second downlink reference signals in a second symbol after the first symbol through the at least one transceiver. The at least one processor may be configured to determine a first communication quality metric using the first downlink reference signals and the first channel estimation result for the first symbol. The at least one processor may be configured to determine a second communication quality metric using the second downlink reference signals and the first channel estimation result for the first symbol. The at least one processor may be configured to determine Doppler spread information corresponding to a difference between the first communication quality metric and the second communication quality metric.

In embodiments, an electronic device is provided. The electronic device may comprise at least one processor and at least one transceiver. The at least one processor may be configured to obtain first uplink reference signals in a first symbol through the at least one transceiver. The at least one processor may be configured to obtain second uplink reference signals in a second symbol after the first symbol through the at least one transceiver. The at least one processor may be configured to obtain a channel estimation result for the second symbol using the second uplink reference signals. The at least one processor may be configured to determine a first communication quality metric using the first uplink reference signals and the channel estimation result. The at least one processor may be configured to determine a second communication quality metric using the second uplink reference signals and the channel estimation result. The at least one processor may be configured to determine Doppler spread information corresponding to a difference between the first communication quality metric and the second communication quality metric.

In embodiments, an electronic device is provided. The electronic device may comprise at least one processor, and memory storing instructions. The instructions, when executed by the at least one processor, may cause the electronic device to obtain first downlink reference signals in a first symbol, obtain a first channel estimation result for the first symbol using the first downlink reference signals, obtain second downlink reference signals in a second symbol after the first symbol, determine a first communication quality metric using the first downlink reference signals and the first channel estimation result for the first symbol, determine a second communication quality metric using the second downlink reference signals and the first channel estimation result for the first symbol, and determine Doppler spread information corresponding to a difference between the first communication quality metric and the second communication quality metric.

In embodiments, an electronic device is provided. The electronic device may comprise at least one processor, and memory storing instructions. The instructions, when executed by the at least one processor, may cause the electronic device to obtain first downlink reference signals in a first symbol, obtain second downlink reference signals in a second symbol after the first symbol, obtain a channel estimation result for the second symbol using the second downlink reference signals, determine a first communication quality metric using the first downlink reference signals and the channel estimation result, determine a second communication quality metric using the second downlink reference signals and the channel estimation result, and determine Doppler spread information corresponding to a difference between the first communication quality metric and the second communication quality metric.

### [Description of the Drawings]

FIG. 1 illustrates a wireless communication system.
FIG. 2 illustrates network entities according to a distributed deployment.
FIG. 3 illustrates an example of a resource structure in a time domain and a frequency domain.
FIG. 4 illustrates an example of a function split of network entities.
FIG. 5 illustrates an example of channels in a communication standard.
FIG. 6A and FIG. 6B illustrate examples of reference signals (RSs) in a slot.
FIG. 7 illustrates an example of functional blocks for processing a reception signal.
FIG. 8A and FIG. 8B illustrate examples of a constellation for a reception signal.
FIG. 9A and FIG. 9B illustrate an example of a calculation of a communication quality using two RSs.
FIG. 10 illustrates a relationship between a communication quality difference and a Doppler frequency.
FIG. 11A and FIG. 11B illustrate examples of a performance of a Doppler estimation using a correlation.
FIG. 12A and FIG. 12B illustrate examples of a performance of a Doppler estimation using a communication quality.
FIG. 13 illustrates an operation flow of an electronic device for determining Doppler spread information using a difference of communication qualities.
FIG. 14A illustrates a functional configuration of a digital unit (DU).
FIG. 14B illustrates a functional configuration of a wireless communication device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a data type (e.g., list, set, subset), a term for an computation state (e.g., step, operation, procedure), a term referring to data (e.g., packet, user stream, information, bit, symbol, codeword), a term referring to a resource (e.g., symbol, slot, subframe, radio frame, subcarrier, resource element (RE), resource block (RB), bandwidth part (BWP), occasion), a term referring to a channel, a term referring to network entities, a term referring to a component of a device, and the like, used in the following description are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), extensible radio access network (xRAN), or open-radio access network (O-RAN)), but this is only an example for description. Various embodiments of the present disclosure may be easily modified and applied in another communication system.

In the present disclosure, a communication quality may be at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above-described examples, it is apparent that other terms having an equivalent technical meaning or other metrics indicating a channel quality may be used. Hereinafter, in the present disclosure, the communication quality being high means a case that a communication quality value related to a signal magnitude is large or a communication quality value related to an error rate is small. As the communication quality is higher, it may mean that a smooth wireless communication environment is guaranteed. In addition, an optimal beam may mean a beam having the highest communication quality among beams.

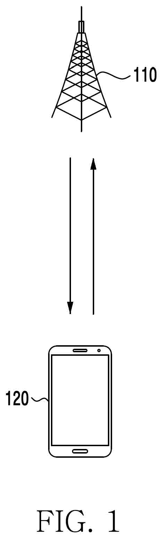

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as 'access point (AP)', 'radio access network (RAN) node' 'eNodeB (eNB)', '5th generation node', 'next generation nodeB (gNB)', 'wireless point', 'transmission/reception point (TRP)', 'communication node', 'wireless communication device', 'wireless communication equipment', 'network node', 'network entity' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 26 GHz, 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

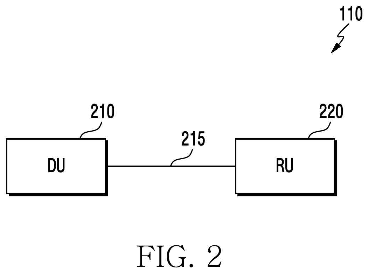

FIG. 2 illustrates network entities according to a distributed deployment. For example, the network entities may include a digital unit (DU) and a radio unit (RU) 220 (or a massive multiple input multiple output unit (MMU)). For example, the network entities may be connected through a fronthaul. Unlike a backhaul between a base station and a core network, the fronthaul refers to entities (e.g., the DU 210 and the RU 220) between a wireless LAN and the base station. In FIG. 2, The DU 210 illustrates an example of a fronthaul structure between one RU 220, but this is only for convenience of description and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may be applied to a fronthaul structure between one DU and three RUs.

Referring to FIG. 2, a base station 110 may include the DU 210 and the RU 220. A fronthaul 215 between the DU 210 and the RU 220 may be operated through an Fx interface. For operation of the fronthaul 215, for example, an interface such as enhanced common public radio interface (eCPRI) and radio over ethernet (ROE) may be used. According to an implementation example, in addition to the DU, the DU 210 may be referred to as a baseband unit (BBU), a digital BBU, a baseband digital unit, a processing unit, digital processing circuitry, baseband processing circuitry, a baseband processing unit, and/or an equivalent technical term. According to an implementation example, in addition to the RU, the RU 220 may be referred to as a remote unit, a radio demote head (RRH), radio processing circuitry, a radio processing unit, an antenna integrated radio, an air radio device, an air scale communication device, a radio device, a radio communication device, and/or an equivalent technical term. In addition, according to an implementation example, a network entity connected to the DU 210 is described as the RU 210 in the present disclosure, but the massive multiple input multiple output unit (MMU) may be connected to the DU 210 and used instead of the RU 210.

As a communication technology develops, mobile data traffic increases, and accordingly, a bandwidth requirement required in a fronthaul between a digital unit and a radio unit has greatly increased. In a deployment such as a centralized/cloud radio access network (C-RAN), a DU may be implemented to perform functions for a packet data convergence protocol (PDCP), a radio link control (RLC), a media access control (MAC), and a physical (PHY), and an RU may be implemented to further perform functions for the PHY layer in addition to a radio frequency (RF) function. The DU 210 may be responsible for an upper layer function of a wireless network.

For example, the DU 210 may perform a function of the MAC layer and a portion of the PHY layer. Herein, the portion of the PHY layer refers to being performed at a relatively higher stage among the functions of the PHY layer, and, as an example, may include channel encoding (or channel decoding), scrambling (or descrambling), modulation (or demodulation), and layer mapping (or layer demapping). According to an embodiment, in a case that the DU 210 conforms to an O-RAN standard, the DU 210 may be referred to as an O-DU. The DU 210 may be replaced with and represented as a first network entity for a base station (e.g., gNB) in embodiments of the present disclosure as necessary. The RU 220 may be responsible for lower layer functions of the wireless network. For example, the RU 220 may perform a portion of the PHY layer and an RF function. Herein, the portion of the PHY layer refers to being performed at a relatively lower stage than the DU 210 among the functions of the PHY layer, and, as an example, may include iFFT transformation (or FFT transformation), CP insertion (CP removal), and digital beamforming. The RU 220 may be referred to as 'an access unit (AU)', 'an access point (AP)', 'a transmission/reception point (TRP)', 'a remote radio head (RRH)', 'a radio unit (RU)', or another term having an equivalent technical meaning. According to an embodiment, in a case that the RU 220 conforms to the O-RAN standard, the RU 220 may be referred to as an O-RU. The RU 220 may be replaced with and represented as a second network entity for the base station (e.g., gNB) in embodiments of the present disclosure as necessary.

In FIG. 2, the base station 110 is described as including the DU 210 and the RU 220, but embodiments of the present disclosure are not limited thereto. The base station according to embodiments may be implemented as a distributed deployment according to a centralized unit (CU) configured to perform functions of upper layers (e.g., a packet data convergence protocol (PDCP), or a radio resource control (RRC)) of an access network and a distributed unit (DU) configured to perform functions of lower layers. As an example, the digital unit (DU) 210 may be implemented by being separated into the CU and the DU. Between the core network (e.g., a 5G core (5GC) or a next generation core (NGC)) and a radio network (RAN), the base station may be implemented in a structure in which the CU, the DU, and the RU are disposed in order. An interface between the CU and the distributed unit (DU) may be referred to as an F1 interface.

The centralized unit (CU) may be responsible for functions of higher layers than the DU by being connected to one or more DUs. For example, the CU may be responsible for functions of a radio resource control (RRC) layer and a packet data convergence protocol (PDCP) layer, and the DU and the RU may be responsible for functions of lower layers. The DU may perform a portion of functions (high PHY) of the radio link control (RLC) layer, the media access control (MAC) layer, and the physical (PHY) layer, and the RU may be responsible for remaining functions (low PHY) of the PHY layer. In addition, as an example, the digital unit (DU) may be included in the distributed unit (DU) according to a distributed deployment implementation of the base station. Hereinafter, unless otherwise defined, operations of a digital unit (DU) and an RU are described, but various embodiments of the present disclosure may be applied to both a base station deployment including the CU or a deployment in which the DU is directly connected to the core network (i.e., the CU and the DU are implemented by being integrated into a base station (e.g., an NG-RAN node) that is one entity).

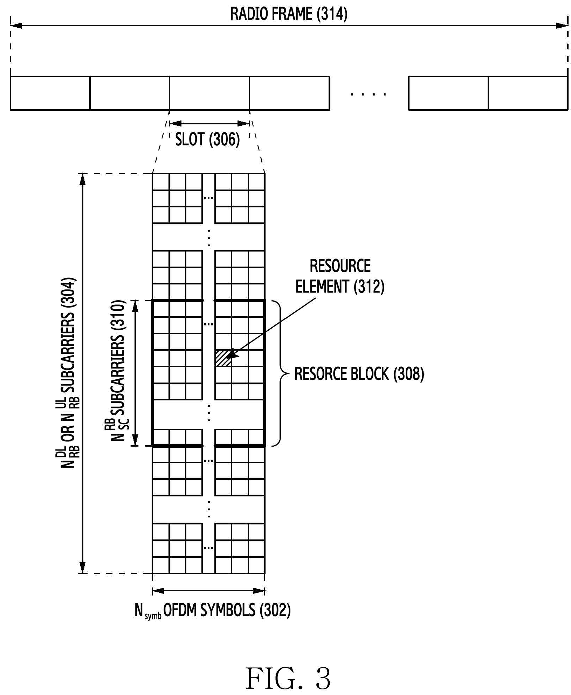

FIG. 3 illustrates an example of a resource structure in a time domain and a frequency domain. An example of a resource structure in a time domain and a frequency domain is illustrated.

FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and N_{symb} OFDM symbols 302 are gathered to form one slot 306. A length of the subframe is defined as 1.0 ms, and a length of a radio frame 314 is defined as 10 ms. A minimum transmission unit in the frequency domain is a subcarrier, and a carrier bandwidth configuring a resource grid may be configured with N_{BW} subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as N_{symb} consecutive OFDM symbols in the time domain and N_{SC}^{RB} consecutive subcarriers in the frequency domain. In an NR system, a resource block (RB) 308 may be defined as N_{SC}^{RB} consecutive subcarriers 310 in the frequency domain. One RB 308 includes N_{SC}^{RB} REs 312 on a frequency axis. In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Channel bandwidth [MHz] | SCS | 5 | 10 | 20 | 50 | 80 | 100 |
|---|---|---|---|---|---|---|---|
| Transmission bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel bandwidth [MHz] | SCS | 50 | 100 | 200 | 400 |
|---|---|---|---|---|---|
| Transmission bandwidth configuration N_{RB} | 60kHz | 66 | 132 | 264 | N/A |
| | 120kHz | 32 | 66 | 132 | 264 |

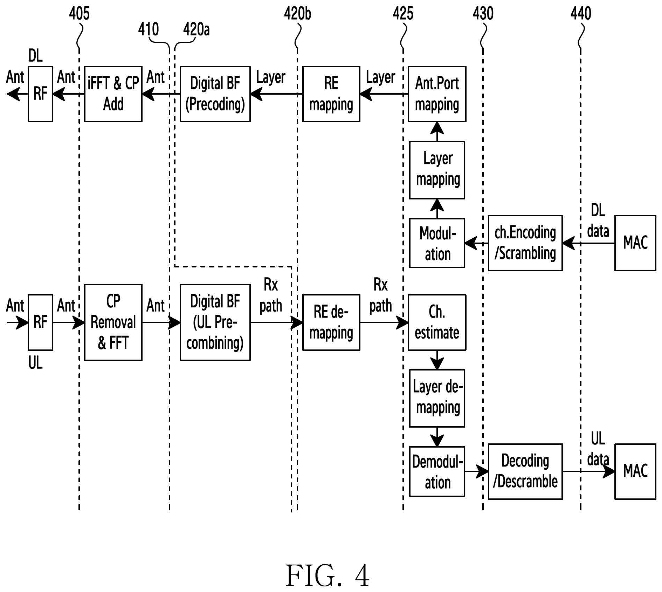

FIG. 4 illustrates an example of a function split of network entities. As a wireless communication technology develops (e.g., introduction of a 5th generation (5G) communication system (or a new radio (NR) communication system)), a frequency band in use has further increased. As a cell radius of a base station becomes very small, the number of RUs required to be installed has further increased. In addition, in a 5G communication system, an amount of data to be transmitted has increased by up to 10 times or more, and a transmission capacity of a wired network transmitted to a fronthaul has greatly increased. Due to the above-described factors, installation cost of the wired network in the 5G communication system may greatly increase. Accordingly, in order to reduce the transmission capacity of the wired network and reduce the installation cost of the wired network, a function split in which a portion of functions of a modem of a DU are transferred to an RU to reduce a transmission capacity of a fronthaul may be used. Hereinafter, although described as the RU, the function split described later may be equally applied not only to the RU but also to a relationship between an MMU and the DU.

In order to reduce a burden of the DU, a role of the RU that is responsible for only an existing RF function may be extended to a portion of functions of a physical layer. As the RU performs functions of higher layers, a throughput of the RU increases so that a transmission bandwidth in the fronthaul increases and, at the same time, a constraint on a latency requirement due to response processing may be lowered. On the other hand, as the RU performs functions of higher layers, a virtualization gain is reduced, and a size, a weight, and a cost of the RU increase. Considering a trade-off between the above-described advantages and disadvantages, it is required to implement an optimal function split.

Referring to FIG. 4, function splits in the physical layer below a MAC layer are illustrated. In a case of a downlink (DL) in which a signal is transmitted to a terminal through a radio network, the base station may sequentially perform channel encoding/scrambling, modulation, layer mapping, antenna mapping, RE mapping, digital beamforming (e.g., precoding), iFFT transformation/CP insertion, and RF transformation. In a case of an uplink (UL) in which a signal is received from the terminal through the radio network, the base station may sequentially perform RF transformation, FFT transformation/CP removal, digital beamforming (pre-combining), RE demapping, channel estimation, layer demapping, demodulation, and decoding/descrambling. A split for uplink functions and downlink functions may be defined in various types by necessity, a discussion in a standard, and the like between vendors, according to the above-described trade-off.

In a first function split 405, the RU performs an RF function, and a DU performs a PHY function. The first function split is that the PHY function in the RU is not implemented, and, as an example, may be referred to as Option 8. In a second function split 410, the RU performs the iFFT transformation/CP insertion in the DL of the PHY function and the FFT transformation/CP removal in the UL, and the DU performs remaining PHY functions. As an example, the second function split 410 may be referred to as Option 7-1. In a third function split 420a, the RU performs the iFFT transformation/CP insertion in the DL of the PHY function and the FFT transformation/CP removal and the digital beamforming in the UL, and the DU performs remaining PHY functions. As an example, the third function split 420a may be referred to as Option 7-2x Category A. In a fourth function split 420b, the RU performs up to the digital beamforming in both the DL and the UL, and the DU performs upper PHY functions after the digital beamforming. As an example, the fourth function split 420b may be referred to as Option 7-2x Category B. In a fifth function split 425, the RU performs up to the RE mapping (or the RE demapping) in both the DL and the UL, and the DU performs upper PHY functions after the RE mapping (or the RE demapping). As an example, the fifth function split 425 may be referred to as Option 7-2. In a sixth function split 430, the RU performs up to the modulation (or the demodulation) in both the DL and the UL, and the DU performs upper PHY functions after the modulation (or the demodulation). As an example, the sixth function split 430 may be referred to as Option 7-3. In a seventh function split 440, the RU performs up to the encoding/scrambling (or the decoding/descrambling) in both the DL and the UL, and the DU performs upper PHY functions after the modulation (or the demodulation). As an example, the seventh function split 440 may be referred to as Option 6.

According to an embodiment, in a case that large-capacity signal processing is expected such as an FR 1 MMU, a function split (e.g., the fourth function split 420b) at a relatively higher layer may be required in order to reduce a fronthaul capacity. In addition, a function split (e.g., the sixth function split 430) at a too high layer may make a control interface complicated, and may include a plurality of PHY processing blocks in the RU, thereby causing a burden in implementation of the RU, and therefore an appropriate function split may be required according to a deployment and an implementation method of the DU and the RU.

According to an embodiment, in a case that precoding of the data received from the DU cannot be processed (i.e., in a case that a capability of the precoding of the RU has a limitation), the third function split 420a or a function split (e.g., the second function split 410) equal to or lower than the third function split 420a may be applied. Conversely, in a case that there is a capability to process the precoding of the data received from the DU, the fourth function split 420b or a function split (e.g., the sixth function split 430) equal to or higher than the fourth function split 420b may be applied.

In an O-RAN standard, a type of an O-RU is distinguished according to whether a precoding function is located in an interface of an O-DU or is located in an interface of the O-RU. For example, the RU may perform operations according to a function split of the third function split 420a (which may be referred to as category A (CAT-A)) for performing beamforming processing or the fourth function split 420b (which may be referred to as category B (CAT-B)). In other words, the O-RU in which the precoding is not performed (i.e., complexity is low) may be referred to as a CAT-A O-RU. The O-RU in which the precoding is performed may be referred to as a CAT-B O-RU. In addition, for example, channel estimation may be also performed in the O-RU instead of the O-DU. For improving an uplink performance, the O-RU may operate according to the sixth function split 430 (Option 7-3).

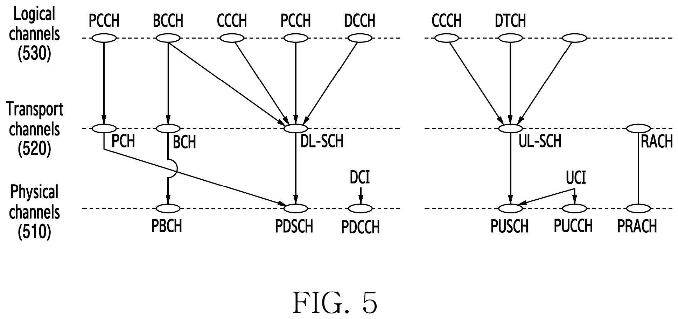

Hereinafter, an upper-PHY refers to physical layer processing processed in the DU of a fronthaul interface. For example, the upper-PHY may include FEC encoding/decoding, scrambling, and modulation/demodulation. Hereinafter, a lower-PHY refers to physical layer processing processed in the RU of the fronthaul interface. For example, the lower-PHY may include FFT/iFFT, digital beamforming, and physical random access channel (PRACH) extraction and filtering. However, the above-described criteria do not exclude embodiments through other function splits. A functional configuration, signaling, or an operation of FIG. 5 to FIG. 14B described later may be applied not only to the third function split 420a and the fourth function split 420b but also to another function split (e.g., the sixth function split 430).

In FIG. 4, between the DU and the RU, in addition, for example, the channel estimation may be also performed in the O-RU instead of the O-DU. For improving the uplink performance, the O-RU may operate according to the sixth function split 430 (Option 7-3).

FIG. 5 illustrates an example of channels in a communication standard.

Referring to FIG. 5, the channels may include a physical channel 510, a transport channel 520, and a logical channel 530 according to layers defined in the communication standard. The physical channel 510 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 510 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may refer to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 510 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may refer to symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 4.

The transport channel 520 may connect a physical layer and a medium access channel (MAC) layer located at a higher level of the physical layer, and may be classified according to how data is transmitted through a wireless interface. In the downlink, the transport channel 520 may include at least one of a paging channel (PCH) for paging, a broadcast channel (BCH) for broadcasting system information, and a downlink shared channel (DL-SCH) transmission of downlink data. In the uplink, the transport channel 520 may include at least one of a random access channel (RACH) for transmission of a random access preamble or an uplink shared channel (UL-SCH) for transmission of downlink data.

The logical channel 530 is located above the transport channel and is mapped to the transport channel 520. The logical channel 530 may be classified into a control channel for transmitting control area information and a traffic channel for transmitting user area information. The control channel of the logical channel 530 may include at least one of a paging control channel (PCCH), a broadcast control channel (BCCH), a common control channel (CCCH), or a dedicated control channel (DCCH). The traffic channel of the logical channel 530 may include a dedicated traffic channel (DTCH).

In describing embodiments of the present disclosure, 'data' may mean sequences other than a reference signal. For example, 'data' obtained by a receiver in uplink communication may mean signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

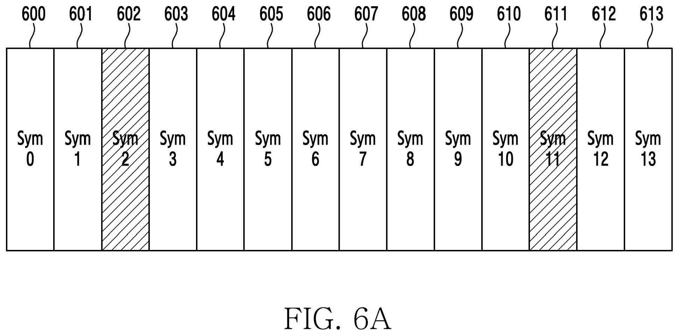

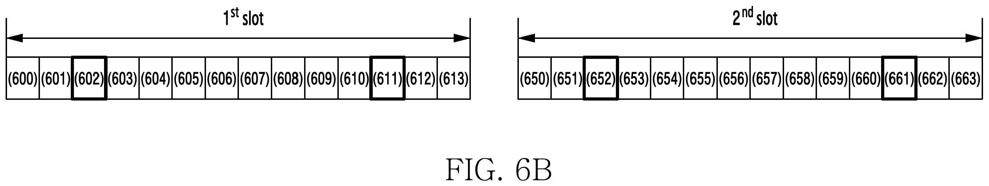

FIG. 6A and FIG. 6B illustrate examples of reference signals (RSs) in a slot. The reference signals may be used for channel estimation. For example, a demodulation reference signal (DMRS) may be used for coherent demodulation with data (e.g., PDSCH, or PUSCH). Hereinafter, although the channel estimation using the DMRS is exemplified, embodiments of the present disclosure described later may be also applied to channel estimation using SRSs. Hereinafter, in order to describe channel estimation of the present disclosure and operations using the DMRS for the channel estimation, an uplink transmission of an NR communication system is described as an example. However, embodiments of the present disclosure are not limited to an uplink of the NR communication system. It goes without saying that embodiments of the present disclosure may be also applied to a downlink or another communication system.

Referring to FIG. 6A, a base station (e.g., a base station 110, or a DU 210) may receive an uplink signal from a terminal (e.g., a terminal 120). The terminal 120 may transmit the uplink signal to the base station 110. The received uplink signal may include data (hereinafter, reception data) received on an uplink channel (e.g., PUSCH). The reception data may be transmitted in data symbols of a time domain. In addition, the received uplink signal may include reference signals (hereinafter, reception reference signals) (e.g., DMRS) for the channel estimation and the coherent demodulation of the data symbols. The reception reference signals may be transmitted in DMRS symbols of the time domain. The base station 110 may receive the reception data in the data symbols of the slot and receive the reception reference signals in the DMRS symbols from the terminal 120. The slot may include 14 symbols (e.g., a symbol #0 600, a symbol #1 601, a symbol #2 602, a symbol #3 603, a symbol #4 604, a symbol #5 605, a symbol #6 606, a symbol #7 607, a symbol #8 608, a symbol #9 609, a symbol #10 610, a symbol #11 611, a symbol #12 612, and a symbol #13 613). At least a portion of symbols among the 14 symbols may be used to carry DMRS sequences. For example, a section of the symbol #2 602 and a section of the symbol #11 611 may include DMRS symbols.

The base station 110 (e.g., the DU 210) may estimate a channel between the base station 110 (e.g., an RU 220) and the terminal 120 through the reception reference signals. The base station 110 may obtain information on a channel that the reception reference signals experience. For example, the base station 110 may obtain information on a channel that the reception data experience through a relationship between a position to which DMRS symbols of the reception reference signals are mapped and a position to which data symbols of the received data are mapped. As an example, the base station 110 may obtain information on a channel that the reception data experience by performing interpolation in a frequency domain or interpolation in the time domain based on the information on the channel that the reception reference signals experience.

The base station 110 may estimate a channel at each resource element in time-frequency resources by using uplink reference signals (e.g., DMRS, or SRS). In FIG. 6A, an example in which channel estimation is performed by using two DMRS symbols (e.g., the symbol #2 602 and the symbol #11 611) within one slot is described, but embodiments of the present disclosure are not limited thereto. DMRS symbols used for the channel estimation are not necessarily limited to symbols within the same slot.

Referring to FIG. 6B, the base station 110 may receive uplink signals over two slots (e.g., a first slot and a second slot). The first slot may include 14 symbols (e.g., the symbol #0 600, the symbol #1 601, the symbol #2 602, the symbol #3 603, the symbol #4 604, the symbol #5 605, the symbol #6 606, the symbol #7 607, the symbol #8 608, the symbol #9 609, the symbol #10 610, the symbol #11 611, the symbol #12 612, and the symbol #13 613). The second slot may include 14 symbols (e.g., a symbol #0 650, a symbol #1 651, a symbol #2 652, a symbol #3 653, a symbol #4 654, a symbol #5 655, a symbol #6 656, a symbol #7 657, a symbol #8 658, a symbol #9 659, a symbol #10 610, a symbol #11 611, a symbol #12 612, and a symbol #13 613). The base station 110 may perform channel estimation through the symbol #11 6111 of the first slot and the symbol #2 652 of the second slot.

Hereinafter, reference signals used for performing channel estimation by an electronic device (e.g., the base station 110, the DU 210, or the RU 220) that performs the channel estimation for an uplink channel may be referred to as a first uplink reference signal and a second uplink reference signal. For example, a reference signal that is earlier in time is referred to as the first uplink reference signal, and a reference signal that is positioned later in time may be referred to as the second uplink reference signal. As an example, the first uplink reference signal may be a DMRS mapped to the symbol #2 602 of the first slot, and the second uplink reference signal may be a DMRS mapped to the symbol #11 611 of the first slot. For another example, the first uplink reference signal may be the DMRS mapped to the symbol #11 611 of the first slot, and the second uplink reference signal may be a DMRS mapped to the symbol #2 652 of the second slot.

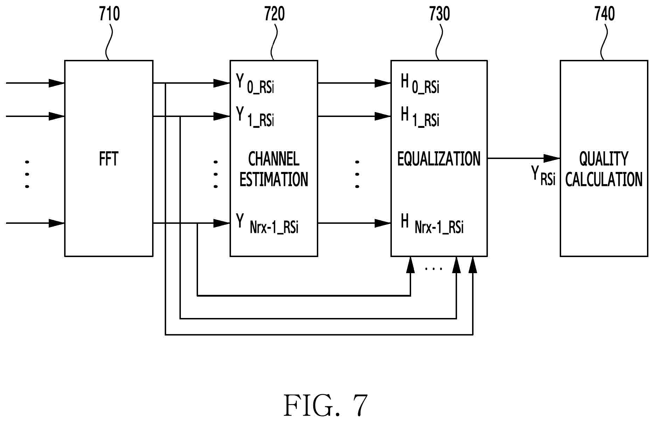

FIG. 7 illustrates an example of functional blocks for processing a reception signal. Each functional block may indicate a set of logical operations or codes configured to perform a corresponding operation, or may include at least a portion of processing circuitry configured to perform a specific operation. An electronic device including the functional blocks may vary according to an implementation example of a network node. For example, an RU 220 may be connected to a DU 210, and network entities may be distributed according to a third function split 420a or a fourth function split 420b. Channel estimation is performed in the DU 210, and thus the electronic device including the functional blocks described later may be the DU 210. The DU 210 may receive IQ values for signals received in the RU 220 from the RU 220 through a fronthaul. In addition, for example, the RU 220 may be connected to the DU 210, and network entities may be distributed according to a sixth function split 430. Channel estimation is performed in the RU 220, and thus the electronic device including the functional blocks described later may be the RU 220. For another example, an MMU may be connected to the DU 210 instead of the RU 220 to perform the channel estimation. In addition, for example, in a case that all processing (e.g., reception, channel estimation, and decoding) for a reception signal is performed within one node without the function split illustrated in FIG. 4, the electronic device including the functional blocks may be a base station 110. Hereinafter, it is described based on the electronic device, but operations in functional blocks of the electronic device may be performed by the base station 110, the DU 210, and/or the RU 220 according to a deployment scenario.

Referring to FIG. 7, the electronic device may obtain uplink signals transmitted from a terminal 120. The electronic device may include an FFT block 710, a channel estimation block 720, an equalization block 730, and a quality calculation block 740.

In the FFT block 710, the electronic device may perform FFT for demodulation of OFDM symbols. Through the FFT, the electronic device may obtain signals mapped to each subcarrier. The signals mapped to each subcarrier may indicate signals (hereinafter, reception signals) received through reception antennas. The reception signals obtained by the electronic device (e.g., the base station 110, the DU 210, or the RU 220) may be represented by the following equation.

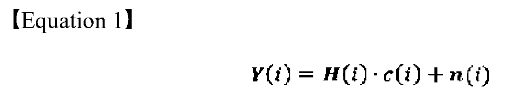

Herein, $Y \left(i\right) = \left[\begin{matrix}{y}_{0} \\ ⋮ \\ {y}_{{N}_{rx} - 1}\end{matrix}\right]$ denotes a vector of a reception signal in an i-th subcarrier for *Nᵣₓ* antenna(s) of a receiving end (e.g., the RU 220, or the base station 110). $H \left(i\right) = \left[\begin{matrix}{h}_{0} \\ ⋮ \\ {h}_{{N}_{rx} - 1}\end{matrix}\right]$ denotes a result of channel estimation for the reception signal in the i-th subcarrier for the *Nᵣₓ* antenna(s). $n \left(i\right) = \left[\begin{matrix}{n}_{0} \\ ⋮ \\ {n}_{{N}_{rx} - 1}\end{matrix}\right]$ denotes a noise component in the i-th subcarrier for the *Nᵣₓ* antenna(s). *c*(*i*) denotes an in-phase quadrature-phase (IQ) value of a DMRS sequence transmitted in the i-th subcarrier.

In the channel estimation block 720, the electronic device may perform channel estimation. The electronic device may obtain a channel matrix (e.g., ***H***) as a result of the channel estimation. For example, the electronic device may obtain the channel estimation result (e.g., ***H***(*i*)) for each subcarrier.

In the equalization block 730, the electronic device may determine a weight matrix for equalization. For example, in a case of assuming a minimum mean square error (MMSE) receiver, the electronic device may apply an MMSE weight to the reception signal. For example, the MMSE weight may be determined according to the following equation.

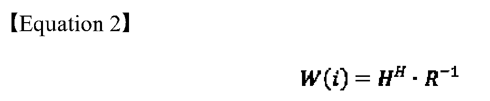

*W*(*i*) denotes a weight matrix in the i-th subcarrier, and ***H*** denotes the channel estimation result (e.g., ***H***(*i*)) in the i-th subcarrier. ***R*** denotes a covariance matrix.

For example, ***R*** may be obtained through the following equation.

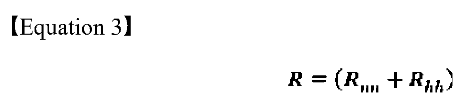

***Rₙₙ** = E*[***n*** · ***n^{H}*]** denotes a noise covariance matrix, and has a magnitude of *Nᵣₓ x Nᵣₓ. **R_{HH}** = **H · H^{H}*** denotes a channel covariance matrix, and has a magnitude of *Nᵣₓ x Nᵣₓ.*

In the equalization block 730, the electronic device may obtain reception signals on which the equalization is performed. For example, an operation of applying the MMSE weight may be understood by the following equation.

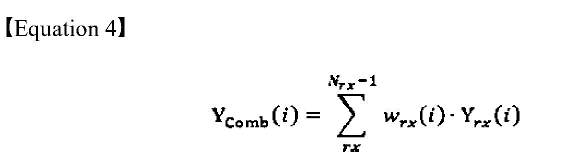

**Y**_{comb}(*i*) denotes a result (e.g., Y_{RSi}) in which a weight is applied to a reception signal in the i-th subcarrier. Y*ᵣₓ*(*i*) denotes the reception signal (e.g., Y_{Nrx-1_RSi}) received in the i-th subcarrier through an rx-th antenna, and *wᵣₓ*(*i*) denotes a weight column for the rx-th antenna, among the MMSE weight matrix for the i-th subcarrier.

In the quality calculation block 740, the electronic device may obtain a communication quality metric. For example, the electronic device may calculate the communication quality metric through the reception signals obtained through the [Equation 1] to the [Equation 4]. In order to describe the communication quality metric, a vector space of the reception signals may be used. A norm value indicates from an origin in the vector space to an actual reception signal. For example, the norm value may be determined according to the following equation.

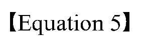

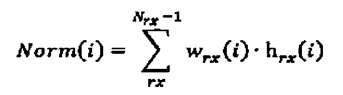

*Norm(i)* denotes a norm value of the reception signal in the i-th subcarrier. *wᵣₓ*(*i*) denotes the weight column for the rx-th antenna among the MMSE weight matrix for the i-th subcarrier. *hᵣₓ*(*i*) denotes a channel vector (e.g., H_{Nrx-1_RSi}) estimated for the rx-th antenna in the i-th subcarrier.

The electronic device may use the norm value to obtain the communication quality metric. The electronic device may estimate a signal transmitted from the terminal 120 through the norm value. For example, a value (hereinafter, an estimation signal value) estimated through the norm value may be calculated through the following equation.

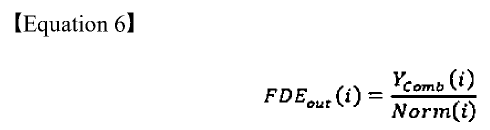

*FDEₒᵤₜ*(*i*) denotes an estimation signal value for the reception signal in the i-th subcarrier. **Y**_{Comb}(*i*) denotes the result in which the weight is applied to the reception signal in the i-th subcarrier. *Norm*(*i*) denotes the norm value of the reception signal in the i-th subcarrier.

The terminal 120 may transmit DMRSs according to a DMRS configuration according to a setting of a network (e.g., radio resource control (RRC) signaling). Since sequences of the DMRSs are predefined according to the DMRS configuration, the electronic device (e.g., the base station 110, the DU 210, or the RU 220) that performs channel estimation may know sequences transmitted from the terminal 120 in advance. The electronic device may determine the communication quality metric (e.g., SINR, SNR, CINR, EVM, BER, or BLER) for the reception signals by comparing estimation signal values estimated from the reception signals and transmission signal values corresponding to the predefined sequences. For example, the electronic device may compare an estimation vector having the estimation signal values and a reception vector having the sequences according to the DMRS configuration. As an example, the electronic device may determine the communication quality metric based on the following equation.

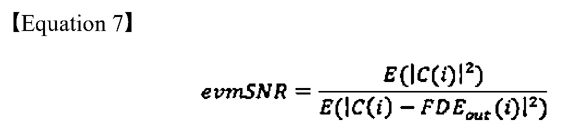

evmSNR denotes the communication quality metric, *FDEₒᵤₜ*(*i*) denotes the estimation signal value for the reception signal in the i-th subcarrier, and *c*(*i*) denotes the transmission signal values (e.g., the IQ values of the DMRS sequence) in the i-th subcarrier. For example, *c*(*i*) denotes a DMRS sequence value allocated to the i-th subcarrier and defined according to a DMRS setting. An E(-) operation denotes an average operation for subcarriers of an uplink frequency resource region.

The communication quality metric obtained through the above-described processes may be used for Doppler estimation. The electronic device may perform the Doppler estimation according to the communication quality metric. Hereinafter, in the present disclosure, in order to estimate a Doppler frequency, a term of the communication quality metric is used, but in addition to the term, an EVM parameter, a communication quality, a signal quality, a reception quality, a channel quality, a quality metric, an error metric, a quality deviation, a quality error, a signal deviation, a signal error, an estimation error, an estimation quality, and/or a parameter indicating an equivalent technical term and/or an equivalent meaning thereto may be used. For a detailed description regarding the communication quality metric, a constellation described later may be referred to.

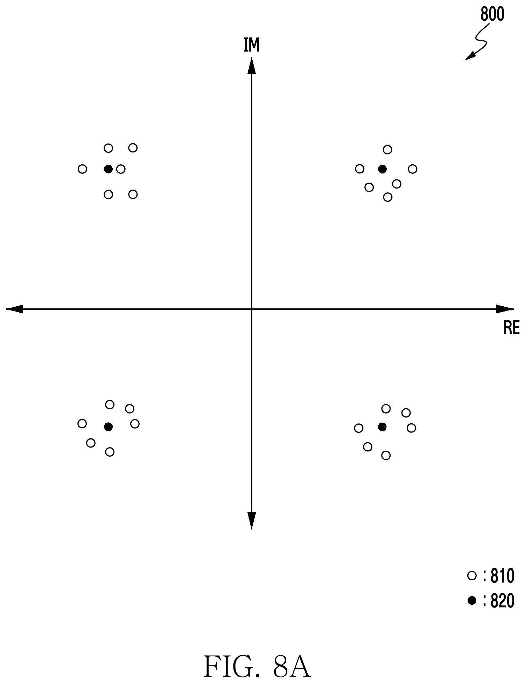

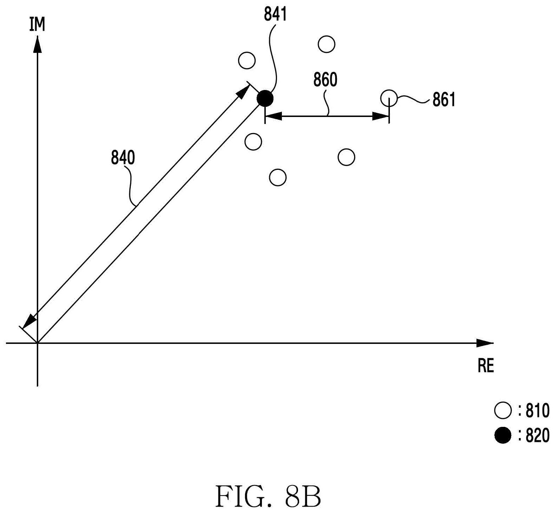

FIG. 8A and FIG. 8B illustrate examples of a constellation for a reception signal. The constellation indicates a signal vector in a complex number space.

Referring to FIG. 8A, a black dot indicates an actually transmitted signal (e.g., a transmission signal value), and a white dot indicates an estimated signal (e.g., an estimation signal value). For example, the transmission signal may be modulated by QPSK. The transmission signal may have candidate values of '00', '01', '10', and '11'. For example, in a complex number plane in which an x-axis indicates a real number and a y-axis indicates an imaginary number, '00', '01', '10', and '11' may correspond to a first quadrant, a second quadrant, a third quadrant, and a fourth quadrant, respectively. The electronic device may determine a bit sequence corresponding to an estimation signal value 810 according to which quadrant the estimation signal value 810 of the reception signal is positioned. A transmission signal value 820 for each of '00', '01', '10', and '11' correspond in an order of 45 degrees, 135 degrees, 225 degrees, and 315 degrees based on a (+)x-axis, respectively. When an ideal wireless channel is assumed, the estimation signal value 810 also matches the transmission signal value 820, but an actual channel is not so. Due to phase noise, carrier leakage, and the like, the estimation signal value 810 may not exactly match the transmission signal value 820. In this case, a difference between the transmission signal value 820 and the estimation signal value 810 indicates an error vector magnitude (EVM). In other words, the EVM indicates a difference between ideal data and calculated data. The transmission signal value 820 corresponds to the ideal data, and the estimation signal value 810 indicates the calculated data. The EVM may be a scalar value indicating an accuracy of digital modulation. As the difference between the transmission signal value 820 and the estimation signal value 810 decreases, in other words, as the EVM decreases, it may indicate that a channel state is good.

Referring to FIG. 8B, among the transmission signal values 820, a distance 840 between a point 841 at which a transmission signal value corresponding to '00' is positioned and an origin indicates ideal data. the distance 840 indicates a square of a magnitude of a transmission signal value (e.g., an IQ value of a DMRS sequence) in an i-th subcarrier. For example, the distance 840 indicates |*c*(*i*)|². It is assumed that, in the i-th subcarrier, the electronic device obtains a specific estimation signal value through the [Equation 1] to the [Equation 6]. The specific estimation signal value may be positioned at a point 861 in the constellation. A distance 860 between the point 841 and the point 861 may indicate EVM. The distance 860 indicates a square of a magnitude of a difference between the transmission signal value (e.g., the IQ value of the DMRS sequence) in the i-th subcarrier and the estimation signal value for the reception signal in the i-th subcarrier. For example, the distance 860 indicates |*c*(*i*) - *FDEₒᵤₜ*(*i*)|².

A denominator term (e.g., the distance 840) of the [Equation 7] indicates an average of the transmission signal values 820 for subcarriers of an uplink frequency resource region. A numerator term (e.g., the distance 860) of the [Equation 7] indicates an average of the difference between the transmission signal value 820 and the estimation signal value 810 for the subcarriers of the uplink frequency resource region.

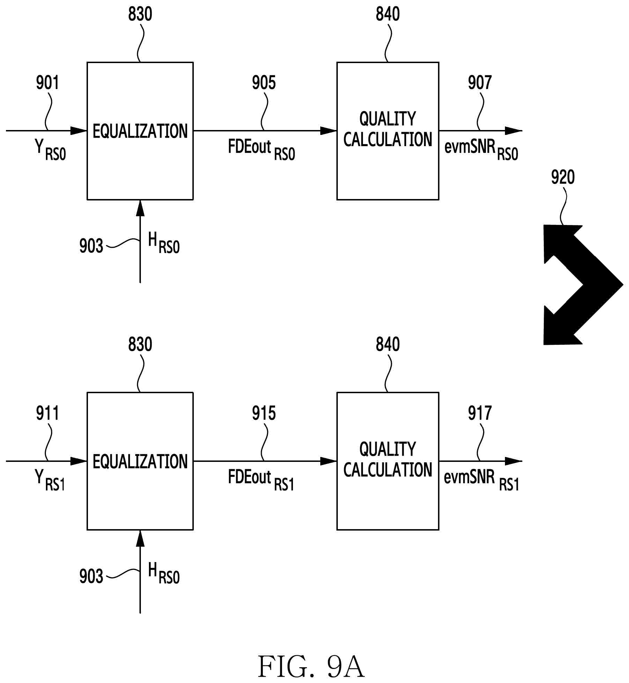

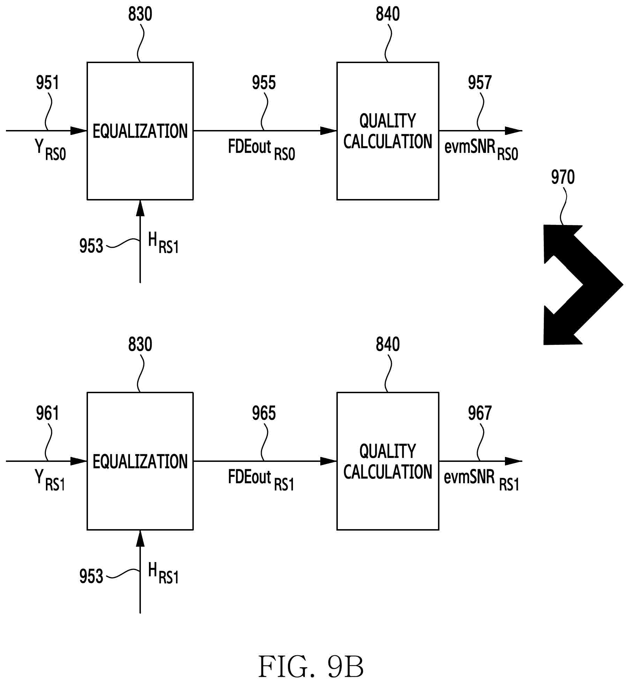

FIG. 9A and FIG. 9B illustrate an example of a calculation of a communication quality using two RSs. The two RSs may include a first uplink reference signal and a second uplink reference signal. For example, the first uplink reference signal may be a DMRS mapped to a symbol #2 602 of a first slot, and the second uplink reference signal may be a DMRS mapped to a symbol #11 611 of the first slot. For another example, the first uplink reference signal may be the DMRS mapped to the symbol #11 611 of the first slot, and the second uplink reference signal may be a DMRS mapped to a symbol #2 652 of a second slot.

Doppler spread may be estimated by performing a correlation operation on results of channel estimation of DMRS symbols (e.g., a first symbol to which the first uplink reference signal is mapped, and a second symbol to which the second uplink reference signal is mapped) separated in time. However, such a method only estimates a Doppler level (or Doppler degree) roughly and is difficult to estimate accurately. In addition to the results of the channel estimation, a direction of estimating the Doppler level through a difference between two communication qualities may be considered. For example, a communication quality in the first symbol to which the first uplink reference signal is mapped may be calculated using the first uplink reference signal and a result of channel estimation using the first uplink reference signal. Likewise, a communication quality in the second symbol to which the second uplink reference signal is mapped may be calculated using the second uplink reference signal and a result of channel estimation using the second uplink reference signal. However, since the method assumes different channels between two uplink reference signals, it is difficult to regard that a difference between the communication qualities directly indicates the Doppler level. Accordingly, an electronic device according to embodiments of the present disclosure may perform Doppler estimation by assuming the same channel vector for two communication qualities. Hereinafter, in FIG. 9A and FIG. 9B, two communication quality metrics calculated in different manners are described.

Referring to FIG. 9A, the electronic device may receive a first uplink reference signal 901 Y_{RS0} and a second uplink reference signal 911 Y_{RS1} from a terminal (e.g., a terminal 120). The first uplink reference signal 901 Y_{RS0} and the second uplink reference signal 911 Y_{RS1} indicate signals received through a plurality of reception antennas. More specifically, the first uplink reference signal 901 Y_{RS0} indicates an FFT output of signals received in a first symbol to which a designated reference signal sequence is mapped. The second uplink reference signal 911 Y_{RS1} indicates an FFT output of signals received in a second symbol to which the designated reference signal sequence is mapped. The electronic device may determine a first estimation signal value 905 FEDout_{RS0} by using the first uplink reference signal 901 Y_{RS0} and a first channel vector 903 H_{RS0} through an equalization block 830. The first channel vector 903 indicates a result of channel estimation using the first uplink reference signal 901. For the equalization block 830, descriptions regarding the equalization block 730 of FIG. 7 may be referred to. The electronic device may perform a comparison between the first estimation signal value 905 FEDout_{RS0} and a first transmission signal value (e.g., an IQ value of a DMRS sequence to be allocated to the first symbol to which the first uplink reference signal 901 Y_{RS0} is mapped) through a quality calculation block 840. The electronic device may calculate a first communication quality metric 907 evmSNR_{RS0} through a difference between the first estimation signal value 905 FEDout_{RS0} and the first transmission signal value. For example, the electronic device may obtain the first communication quality metric 907 evmSNR_{RS0} through the [Equation 6]. The first communication quality metric 907 evmSNR_{RS0} may indicate a communication quality metric in the first symbol to which the first uplink reference signal is mapped.

The electronic device may determine a second estimation signal value 915 FEDout_{RS1} by using the second uplink reference signal 911 Y_{RS1} and the first channel vector 903 H_{RS0} through the equalization block 830. The first channel vector 903 indicates the result of the channel estimation using the first uplink reference signal 901. As described above, the electronic device may determine the second estimation signal value 915 FEDout_{RS1} by using the first channel vector H_{RS0} instead of using a second channel vector H_{RS1}. For the equalization block 830, descriptions regarding the equalization block 730 of FIG. 7 may be referred to. The electronic device may perform a comparison between the second estimation signal value 915 FEDout_{RS1} and a second transmission signal value (e.g., an IQ value of a DMRS sequence to be allocated to the second symbol to which the second uplink reference signal 911 Y_{RS1} is mapped) through the quality calculation block 840. The electronic device may calculate a second communication quality metric 917 evmSNR_{RS1} through a difference between the second estimation signal value 915 FEDout_{RS1} and the second transmission signal value. For example, the electronic device may obtain the second communication quality metric 917 evmSNR_{RS1} through the [Equation 6]. The second communication quality metric 917 evmSNR_{RS1} may indicate a communication quality metric in the second symbol to which the second uplink reference signal is mapped.

In a case that a channel does not change over time, the Doppler spread may be 0. In other words, in a static environment, the first channel vector 903 H_{RS0} and the second channel vector H_{RS1} are identical. However, in a fading environment in which the Doppler spread is not 0, a correlation between the first channel vector 903 H_{RS0} and the second channel vector H_{RS1} may be inversely proportional to Doppler. As a wireless channel environment changes rapidly, the correlation between two channel vectors may decrease. As the wireless channel environment is stable, the correlation between two channel vectors may increase. When it is assumed that two channel vectors are identical, an influence due to the Doppler according to a time variation may be estimated more accurately. For example, when the second communication quality metric is estimated in the second symbol to which the second uplink reference signal is mapped, the first channel vector 903 H_{RS0} according to the channel estimation using the first uplink reference signal may be used. Since a time gap between two symbols (e.g., the first symbol to which the first uplink reference signal is mapped and the second symbol to which the second uplink reference signal is mapped) is not followed by a channel variation, a communication quality metric may be calculated to be lower than an actual value.

The electronic device according to embodiments may estimate a degree of the Doppler spread through a difference 920 between communication quality metrics of the two symbols. Since communication quality metrics of different reception signals received in the two symbols are compared while assuming the same channel vector, an influence due to a channel change is reduced, and thus, relatively, a Doppler influence according to a time difference may be estimated more accurately. For example, the degree of the Doppler spread may be obtained through the following equation.

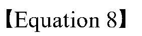

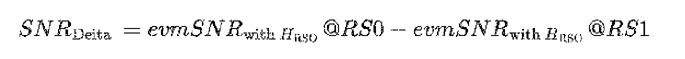

***SNR**_{Delta}* is a communication quality difference and denotes the degree of the Doppler spread, ***evmSNR***_{*with**H***_{RS0}} @*RS*0 denotes the first communication quality metric 907, and ***evmSNR***_{*with**H***_{RS0}} *@RS1* denotes the second communication quality metric 917.

In FIG. 9A, the Doppler is estimated through a mismatch using the second uplink reference signal 911 and the first channel vector 903, but embodiments of the present disclosure are not limited thereto. By applying the second channel vector, which is the result of the channel estimation of the second uplink reference signal 911, to the first uplink reference signal 901, estimating the degree of the Doppler spread may also be understood as an embodiment of the present disclosure.

Referring to FIG. 9B, the electronic device may receive a first uplink reference signal 951 Y_{RS0} and a second uplink reference signal 961 Y_{RS1} from a terminal (e.g., the terminal 120). The first uplink reference signal 951 Y_{RS0} and the second uplink reference signal 961 Y_{RS1} represent signals received through a plurality of reception antennas. More specifically, the first uplink reference signal 951 Y_{RS0} indicates an FFT output of signals received in a first symbol to which a designated reference signal sequence is mapped. The second uplink reference signal 961 Y_{RS1} indicates an FFT output of signals received in a second symbol to which a designated reference signal sequence is mapped. The electronic device may determine a first estimation signal value 955 FEDout_{RS0} by using the first uplink reference signal 951 Y_{RS0} and a second channel vector 953 H_{RS1} through the equalization block 830. The second channel vector 953 indicates a result of channel estimation using the second uplink reference signal 961 instead of using the first uplink reference signal 951. As described above, the electronic device may determine the first estimation signal value 955 FEDout_{RS0} by using the second channel vector 953 H_{RS1} instead of using the first channel vector H_{RS0}. For the equalization block 830, descriptions regarding the equalization block 730 of FIG. 7 may be referred to. The electronic device may perform a comparison between the first estimation signal value 955 FEDout_{RS0} and a first transmission signal value (e.g., an IQ value of a DMRS sequence to be allocated to the first symbol to which the first uplink reference signal 951 Y_{RS0} is mapped) through the quality calculation block 840. The electronic device may calculate a first communication quality metric 957 evmSNR_{RS0} through a difference between the first estimation signal value 955 FEDout_{RS0} and the first transmission signal value. For example, the electronic device may obtain the first communication quality metric 957 evmSNR_{RS0} through the [Equation 6]. The first communication quality metric 957 evmSNR_{RS0} may indicate a communication quality metric in the first symbol to which the first uplink reference signal is mapped.

The electronic device may determine a second estimation signal value 965 FEDout_{RS1} by using the second uplink reference signal 961 Y_{RS1} and a second channel vector 953 H_{RS1} through the equalization block 830. The second channel vector 953 indicates the result of the channel estimation using the second uplink reference signal 961. For the equalization block 830, descriptions regarding the equalization block 730 of FIG. 7 may be referred to. The electronic device may perform a comparison between the second estimation signal value 965 FEDout_{RS1} and a second transmission signal value (e.g., an IQ value of a DMRS sequence to be allocated to the second symbol to which the second uplink reference signal 961 Y_{RS1} is mapped) through the quality calculation block 840. The electronic device may calculate a second communication quality metric 967 evmSNR_{RS1} through a difference between the second estimation signal value 965 FEDout_{RS1} and the second transmission signal value. For example, the electronic device may obtain the second communication quality metric 967 evmSNR_{RS1} through the [Equation 6]. The second communication quality metric 967 evmSNR_{RS1} may indicate a communication quality metric in the second symbol to which the second uplink reference signal is mapped.

The electronic device according to embodiments may estimate the degree of the Doppler spread through the difference 970 between communication quality metrics of the two symbols. For example, the degree of the Doppler spread may be obtained through the following equation.

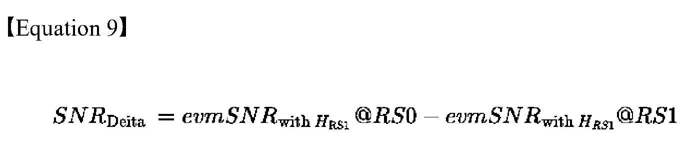

***SNR**_{Delta}* is a communication quality difference and denotes the degree of the Doppler spread, ***evmSNR***_{*with**H***_{RS1}} *@RS*0 denotes the first communication quality metric 957, and ***evmSNR***_{*with**H***_{RS1}} *@RS*1 denotes the second communication quality metric 967.

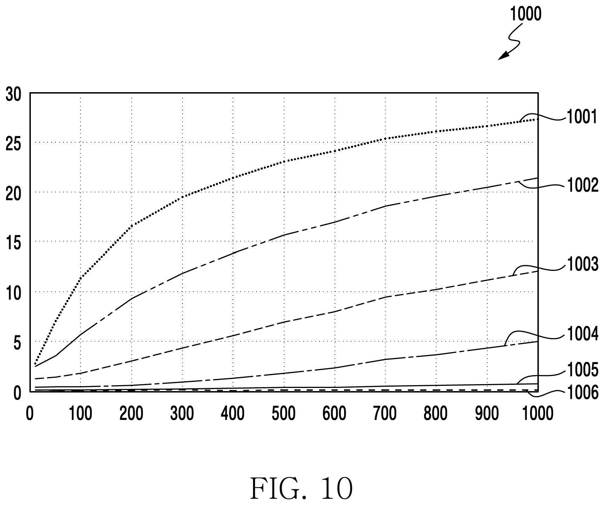

FIG. 10 illustrates a relationship between a communication quality difference (e.g., the SNR_{Delta} of the [Equation 8]) and a Doppler frequency.

Referring to FIG. 10, a graph 1000 indicates a communication quality difference per Doppler frequency. A horizontal axis of the graph 1000 indicates a Doppler frequency (unit: Hz), and a vertical axis of the graph 1000 indicates a communication quality difference (unit: dB). The communication quality difference corresponds to the SNR_{Delta} of the [Equation 8]. A first line 1001 indicates a communication quality difference per Doppler frequency when a first communication quality metric 907 is about 30 dB. A second line 1002 indicates a communication quality difference per Doppler frequency when the first communication quality metric 907 is about 20 dB. A third line 1003 indicates a communication quality difference per Doppler frequency when the first communication quality metric 907 is about 10 dB. A fourth line 1004 indicates a communication quality difference per Doppler frequency when the first communication quality metric 907 is about 0 dB. A fifth line 1005 indicates a communication quality difference per Doppler frequency when the first communication quality metric 907 is about -10 dB. A sixth line 1006 indicates a communication quality difference per Doppler frequency when the first communication quality metric 907 is about -20 dB.

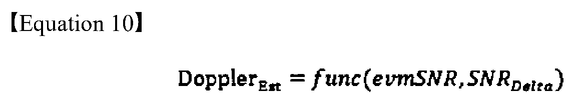

**Dopple_{Ext}** denotes an estimated Doppler frequency, and evmSNR denotes the first communication quality metric 907 for a first uplink reference signal, and func is a function (hereinafter, a relationship function) corresponding to a relationship between the evmSNR and a communication quality difference. The communication quality difference indicates a difference between the first communication quality metric 907 for the first uplink reference signal and a second communication quality metric 917 for the second uplink reference signal.

Referring to the graph 1000, it may be confirmed that a relationship of a function applied according to the evmSNR is changed. According to an embodiment, an electronic device may identify a relationship function according to the first communication quality metric 907 for the first uplink reference signal among a plurality of relationship functions. The electronic device may determine a Doppler frequency according to a communication quality difference in two RS symbols by using the identified relationship function. The communication quality difference may correspond to a difference between the first communication quality metric using the first uplink reference signal of a first symbol and a channel vector, and the second communication quality metric using a second uplink reference signal of a second symbol and the channel vector. For example, the channel vector may be a first channel vector (e.g., a first channel vector 903 H_{RS0}) using the first uplink reference signal. The second communication quality metric may be calculated through a mismatch. For another example, the channel vector may be a second channel vector (e.g., a second channel vector 953 H_{RS1}) using the second uplink reference signal. The first communication quality metric may be calculated through a mismatch.

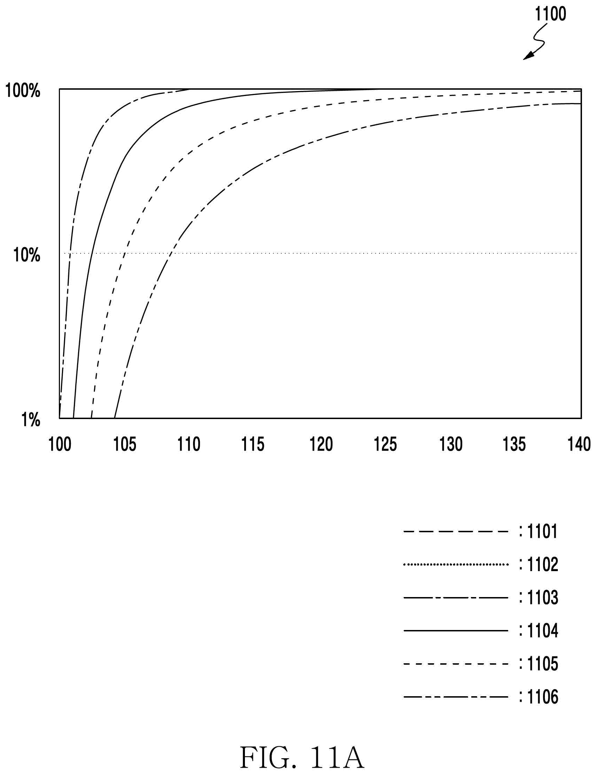

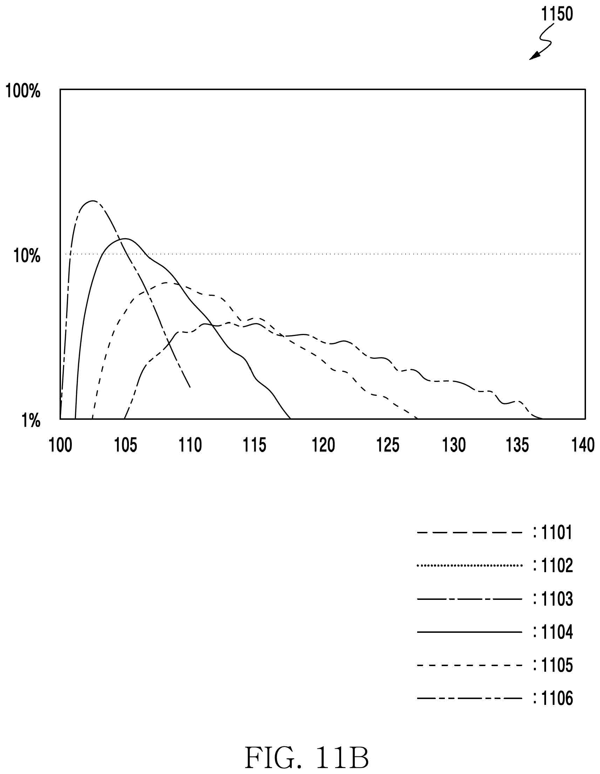

FIG. 11A and FIG. 11B illustrate examples of a performance of Doppler estimation using a correlation. In FIG. 11A and FIG. 11B, a relationship between a correlation result according to a correlation operation of two channel vectors and a Doppler frequency is described.

Referring to FIG. 11A, a graph 1100 indicates a cumulative distribution function (CDF) per correlation result. A first line 1101 indicates a CDF per correlation result of a Doppler frequency 10 Hz. A second line 1102 indicates a CDF per correlation result of a Doppler frequency 50 Hz. A third line 1103 indicates a CDF per correlation result of a Doppler frequency 100 Hz. A fourth line 1104 indicates a CDF per correlation result of a Doppler frequency 200 Hz. A fifth line 1105 indicates a CDF per correlation result of a Doppler frequency 300 Hz. A sixth line 1106 indicates a CDF per correlation result of a Doppler frequency 400 Hz.

Referring to FIG. 11B, a graph 1150 indicates a probability density function (PDF) per correlation result. A first line 1151 indicates a PDF per correlation result of the Doppler frequency 10 Hz. A second line 1152 indicates a PDF per correlation result of the Doppler frequency 50 Hz. A third line 1153 indicates a PDF per correlation result of the Doppler frequency 100 Hz. A fourth line 1154 indicates a PDF per correlation result of the Doppler frequency 200 Hz. A fifth line 1155 indicates a PDF per correlation result of the Doppler frequency 300 Hz. A sixth line 1156 indicates a PDF per correlation result of the Doppler frequency 400 Hz.

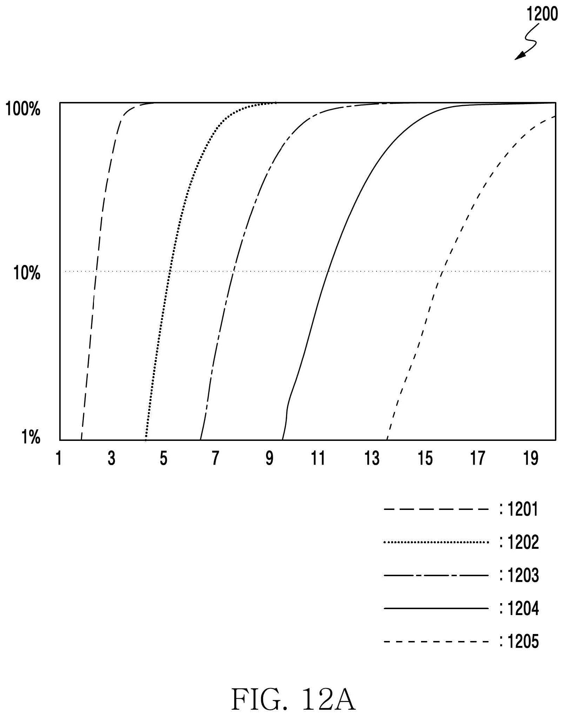

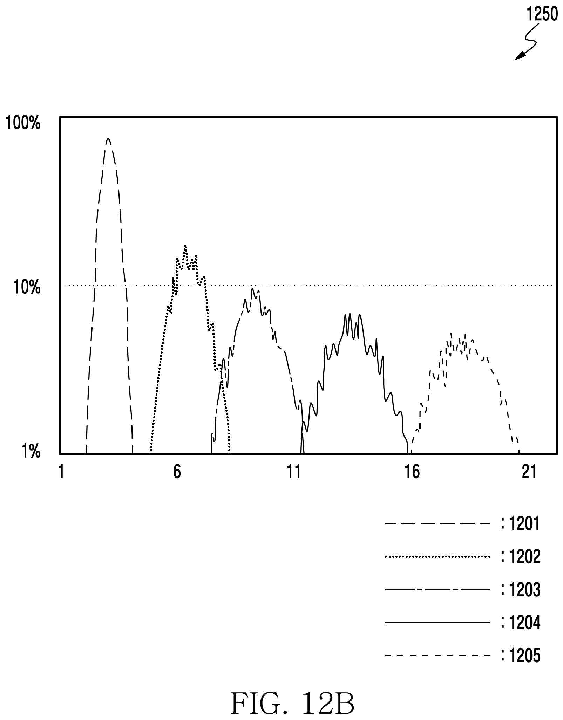

FIG. 12A and FIG. 12B illustrate examples of a performance of Doppler estimation using a communication quality.

Referring to FIG. 12A, a graph 1200 indicates a cumulative distribution function (CDF) per communication quality difference. A first line 1201 indicates a CDF per communication quality difference of a Doppler frequency 10 Hz. A second line 1202 indicates a CDF per communication quality difference of a Doppler frequency 50 Hz. A third line 1203 indicates a CDF per communication quality difference of a Doppler frequency 100 Hz. A fourth line 1204 indicates a CDF per communication quality difference of a Doppler frequency 200 Hz. A fifth line 1205 indicates a CDF per communication quality difference of a Doppler frequency 400 Hz.

Referring to FIG. 12B, a graph 1250 indicates a probability density function (PDF) per communication quality difference. A first line 1251 indicates a PDF per communication quality difference of the Doppler frequency 10 Hz. A second line 1252 indicates a PDF per communication quality difference of the Doppler frequency 50 Hz. A third line 1253 indicates a PDF per communication quality difference of the Doppler frequency 100 Hz. A fourth line 1254 indicates a PDF per communication quality difference of the Doppler frequency 200 Hz. A fifth line 1255 indicates a PDF per communication quality difference of the Doppler frequency 400 Hz.

In the present disclosure, for two symbols (e.g., DMRS symbols, and SRS symbols) separated in time, a technique for estimating a Doppler frequency is described by comparing a communication quality metric (e.g., a first communication quality metric 907 evmSNR_{RS0}) estimated without a mismatch and a communication quality metric (e.g., a second communication quality metric 917 evmSNR_{RS1}) using the mismatch . Since a Doppler is estimated by a difference of the communication quality metrics instead of a method of estimating the Doppler through a correlation operation of channel vectors (or channel matrices), more quantitative estimation is possible. When comparing the graph 1100 of FIG. 11A and the graph 1200 of FIG. 12A, when a variable (e.g., a correlation result and a communication quality difference) is changed, a difference between Doppler frequencies is different. For example, based on a fixed CDF, for a difference (e.g., 10 Hz and 100 Hz) between identical Doppler frequencies, a difference of communication quality differences is greater than a difference of correlation results. In other words, it may be confirmed that a communication quality is more advantageous than a correlation result in distinguishing the Doppler frequency. Likewise, when comparing the graph 1150 of FIG. 11B and the graph 1250 of FIG. 12B, when a variable (e.g., a correlation result and a communication quality difference) is changed, a difference between Doppler frequencies is different. For example, based on a fixed PDF, for a difference (e.g., 10 Hz and 100 Hz) between identical Doppler frequencies, a difference of communication quality differences is greater than a difference of correlation results. In other words, it may be confirmed that a communication quality is more advantageous than a correlation result in distinguishing the Doppler frequency.

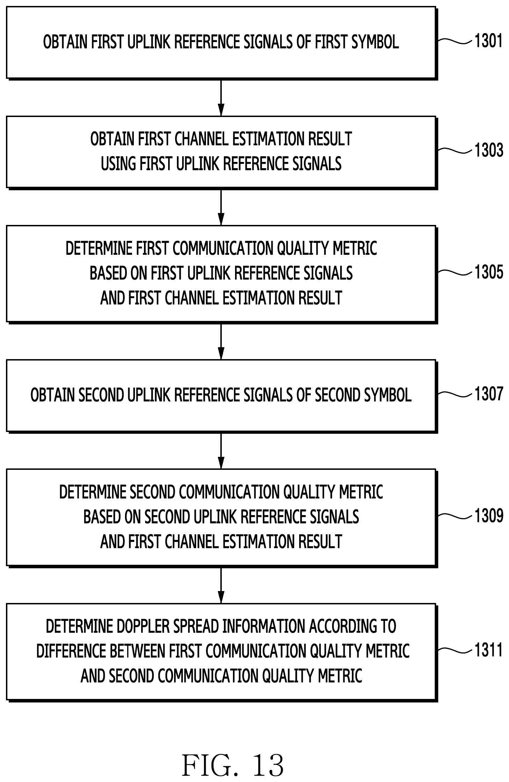

FIG. 13 illustrates an operation flow of an electronic device (e.g., a DU 210, or a base station 110) for determining Doppler spread information using a difference of communication qualities. The Doppler spread information may indicate a parameter, an indicator, and/or a value related to a Doppler frequency.

Referring to FIG. 13,

In operation 1301, the electronic device may obtain first uplink reference signals of a first symbol. For example, the first uplink reference signals may be DMRSs. The DMRSs may be mapped to the first symbol. For another example, the first uplink reference signals may be SRSs. The electronic device, as a receiver of an OFDM communication, may obtain the first uplink reference signals through an FFT operation (e.g., an FFT block 710) of signals received on the first symbol. The first uplink reference signals may correspond to the first symbol on a time axis and subcarriers of an uplink resource region allocated on a frequency axis.

In operation 1303, the electronic device may obtain a first channel estimation result using the first uplink reference signals. The electronic device may perform channel estimation using the first uplink reference signals. The electronic device may perform the channel estimation per subcarrier for each of a plurality of reception antennas. The electronic device may obtain a channel vector per subcarrier for each of the plurality of reception antennas.

In operation 1305, the electronic device may determine a first communication quality metric based on the first uplink reference signals and the first channel estimation result. For example, the electronic device may identify a reception signal corresponding to a specific subcarrier among the first uplink reference signals. The electronic device may identify a channel vector corresponding to the specific subcarrier among the first channel estimation result. The electronic device may determine an estimation signal (e.g., the estimation signal value of the [Equation 6]) in the first symbol and the specific subcarrier by using the reception signal and the channel vector. The electronic device may determine a transmission signal (e.g., a transmission signal value corresponding to predefined sequences) designated for a terminal (e.g., a terminal 120) to transmit, in the first symbol and the specific subcarrier. The electronic device may determine a difference between the transmission signal and the estimation signal for each subcarrier. The electronic device may determine a communication quality metric by using the difference. For example, the communication quality metric may be the evmSNR of the [Equation 7]. For another example, the communication quality metric is EVM, and may be proportional to a magnitude of the difference. For another example, the communication quality metric may be indicated as a level corresponding to the difference among a plurality of levels.

In operation 1307, the electronic device may obtain second uplink reference signals of a second symbol. For example, the second uplink reference signals may be DMRSs. The DMRSs may be mapped to the second symbol. For another example, the second uplink reference signals may be SRSs. The second symbol may be a symbol mapped to transmit a reference signal (e.g., DMRS, or SRS) after the first symbol. As an example, referring to FIG. 6A, the first symbol is a symbol to which the first uplink reference signals are mapped, and corresponds to a symbol #2 602 of a first slot, and the second symbol may correspond to a symbol #11 611 of the first slot. For another example, referring to FIG. 6B, the first symbol is a symbol to which the second uplink reference signals are mapped, and corresponds to the symbol #11 611 of the first slot, and the second symbol may correspond to a symbol #2 652 of a second slot after the first slot. The electronic device, as a receiver of an OFDM communication, may obtain the second uplink reference signals through an FFT operation (e.g., an FFT block 710) of signals received on the second symbol. The second uplink reference signals may correspond to the second symbol on the time axis and subcarriers of the uplink resource region allocated on the frequency axis.

In operation 1309, the electronic device may determine a second communication quality metric based on the second uplink reference signals and the first channel estimation result. For example, the electronic device may identify a reception signal corresponding to a specific subcarrier among the second uplink reference signals. The electronic device may identify a channel vector corresponding to the specific subcarrier among the first channel estimation result. The electronic device may determine an estimation signal (e.g., the estimation signal value of the [Equation 6]) in the second symbol and the specific subcarrier by using the reception signal and the channel vector. The electronic device according to embodiments may use the channel vector of the first channel estimation result, instead of using the channel vector estimated through the second uplink reference signals, in order to determine the second communication quality metric. By determining the communication quality metric through such a mismatch, a degree of Doppler spread described later may be calculated more quantitatively. The electronic device may determine a transmission signal (e.g., a transmission signal value corresponding to predefined sequences) designated for the terminal (e.g., the terminal 120) to transmit, in the second symbol and the specific subcarrier. The electronic device may determine a difference between the transmission signal and the estimation signal for each subcarrier. The electronic device may determine a communication quality metric by using the difference. For example, the communication quality metric may be the evmSNR of the [Equation 7]. For another example, the communication quality metric is EVM, and may be proportional to a magnitude of the difference. For another example, the communication quality metric may be indicated as a level corresponding to the difference among a plurality of levels.

In operation 1311, the electronic device may determine the Doppler spread information according to a difference between the first communication quality metric and the second communication quality metric. The Doppler spread information may indicate the Doppler frequency. The Doppler frequency may be estimated through a change of a wireless channel environment between two symbols (e.g., the first symbol, and the second symbol). As a difference between communication quality metrics of two symbols increases, a higher Doppler frequency may be represented. As the difference between communication quality metrics of two symbols decreases, a lower Doppler frequency may be represented. This is because, when a wireless channel actually changes less, the Doppler frequency may be measured to be low. The electronic device may determine the difference between the first communication quality metric and the second communication quality metric. The electronic device may determine the Doppler spread information according to the difference through a relationship function. The electronic device may identify the relationship function to be used among a plurality of relationship functions. For example, the electronic device may identify the relationship function to be used among the plurality of relationship functions based on the first communication quality metric. For example, the electronic device may identify the relationship function to be used among the plurality of relationship functions based on the second communication quality metric. The electronic device may determine the Doppler spread information by applying the difference to the identified relationship function.

The Doppler spread information estimated through FIG. 13 may be used in various ways. According to an embodiment, the electronic device may estimate a data channel based on the Doppler spread information. The electronic device may perform channel estimation for data symbols by reflecting an influence according to the Doppler spread information. Also, according to an embodiment, the electronic device may perform scheduling based on the Doppler spread information. For example, the electronic device may perform the scheduling only for a frequency region in which the Doppler frequency is measured to be lower than a reference value. For example, the electronic device may determine a modulation and coding scheme (MCS) level according to the Doppler frequency. If the Doppler frequency is measured to be high, and an environment in which a channel changes rapidly is expected, the electronic device may schedule the terminal to transmit data through a robust modulation scheme (e.g., QPSK) by lowering the MCS level. For example, the electronic device may determine whether to set frequency hopping based on a magnitude of the Doppler frequency. If the environment in which the channel changes rapidly is expected, a communication performance in an uplink channel may be compensated through the frequency hopping.

Utilization of the Doppler spread information described above may be implemented in various aspects according to a distribution scheme of a network node. For example, a DU 210 and an RU 220 may be used to provide an access network. According to an embodiment, the RU 220 may perform channel estimation using reference signals (e.g., DMRSs), and may determine the Doppler spread information. Thereafter, the RU 220 may transmit the Doppler spread information to the DU 210. The DU 210 may perform scheduling using the Doppler spread information. Also, according to an embodiment, the DU 210 may perform channel estimation using the reference signals (e.g., DMRSs), and may determine the Doppler spread information. Thereafter, the DU 210 may perform scheduling using the Doppler spread information. Also, according to an embodiment, the RU 220 may perform channel estimation using the reference signals (e.g., DMRSs), and may determine the Doppler spread information. Thereafter, the RU 220 may perform channel estimation for data symbols using the Doppler spread information. Also, according to an embodiment, the DU 210 may perform channel estimation using the reference signals (e.g., DMRSs), and may determine the Doppler spread information. Thereafter, the DU 210 may perform channel estimation for data symbols using the Doppler spread information.

In FIG. 13, although the operation 1307 is illustrated to be performed after the operation 1303 and the operation 1305, embodiments of the present disclosure are not limited thereto. An order illustrated in FIG. 13 is only an example, and the operation 1307 may be performed before the operation 1303 or the operation 1305. In other words, an operation of obtaining the second uplink reference signals may be performed independently of an operation of obtaining the first channel estimation result or an operation of determining the first communication quality metric.

In FIG. 13, although an example in which a network device (e.g., the base station 110, the DU 210, or the RU 220) performing communication with the terminal (e.g., the terminal 120) estimates an uplink channel is described, embodiments of the present disclosure are not limited thereto. By using the same principle, the terminal 120 may perform downlink channel estimation. The terminal 120 may determine a Doppler frequency for a downlink channel through downlink reference signals in two symbols and a communication quality metric according to a mismatch. For example, the terminal 120 may receive first downlink reference signals in a first symbol, and may receive second downlink reference signals in a second symbol. The terminal 120 may obtain a channel estimation result for the downlink channel through the first downlink reference signals. The channel estimation result may determine a channel matrix for the downlink channel between the terminal and the network node (e.g., the base station 110, or the RU 220). The terminal 120 may determine first estimation signals for the first downlink reference signals by using the channel estimation result. The terminal 120 may receive downlink configuration information (e.g., DMRS configuration information) from a network through RRC signaling. The terminal 120 may know downlink reference sequences in the first symbol in advance. The terminal 120 may determine a first communication quality metric for the first symbol by comparing first transmission signals corresponding to the downlink reference sequences and the first estimation signals. The terminal 120 may determine second estimation signals for the second downlink reference signals by using the channel estimation result. A mismatch between a channel and a reference signal may be applied equally in a downlink. The terminal 120 may know downlink reference sequences in the second symbol in advance according to the configuration information. The terminal 120 may determine a second communication quality metric for the second symbol by comparing second transmission signals corresponding to the downlink reference sequences and the second estimation signals. The terminal 120 may determine Doppler spread information by comparing the first communication quality metric for the first symbol and the second communication quality metric for the second symbol. The terminal 120 may perform channel estimation for a downlink data channel by using the Doppler spread information.

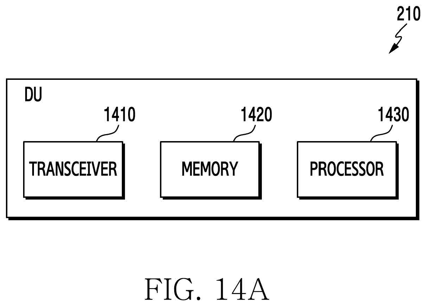

FIG. 14A illustrates a functional configuration of a digital unit (DU). A configuration illustrated in FIG. 14A may be understood as a configuration of a DU 210 of FIG. 14A as a portion of a base station. Terms such as '...unit' and '...device' used hereinafter mean a unit for processing at least one function or operation, and it may be implemented by hardware, software, or a combination of hardware and software.

Referring to FIG. 14A, the DU 210 includes a transceiver 1410, memory 1420, and a processor 1430.

The transceiver 1410 may perform functions for transmitting and receiving a signal in a wired communication environment. The transceiver 1410 may include a wired interface for controlling a direct connection between a device and a device through a transmission medium (e.g., a copper wire, or an optical fiber). For example, the transceiver 1410 may transmit an electrical signal to another device through a copper wire, or may perform conversion between an electrical signal and an optical signal. The DU 210 may perform communication with a radio unit (RU) through the transceiver 1410.

The transceiver 1410 may perform functions for transmitting and receiving a signal in a wireless communication environment. For example, the transceiver 1410 may perform a conversion function between a baseband signal and a bit sequence according to a physical layer specification of a system. For example, when transmitting data, the transceiver 1410 generates complex symbols by encoding and modulating a transmission bit sequence. In addition, when receiving data, the transceiver 1410 restores a reception bit sequence through demodulation and decoding of a baseband signal. In addition, the transceiver 1410 may include a plurality of transmission and reception paths.

The transceiver 1410 may transmit and receive a signal. For example, the transceiver 1410 may transmit a management plane (M-plane) message. For example, the transceiver 1410 may transmit a management plane (S-plane) message. For example, the transceiver 1410 may transmit a control plane (C-plane) message. For example, the transceiver 1410 may transmit a user plane (U-plane) message. For example, the transceiver 1410 may receive the user plane message. Although only the transceiver 1410 is illustrated in FIG. 14A, according to another embodiment, the DU 210 may include two or more transceivers.

The transceiver 1410 transmits and receives a signal as described above. Accordingly, all or a portion of the transceiver 1410 may be referred to as a communication unit, a transmission unit, a reception unit, or a transceiver unit. In addition, in the following description, transmission and reception performed through a wireless channel are used as a meaning including that processing as described above is performed by the transceiver 1410. According to an embodiment, the transceiver 1410 may obtain random access signals related to an NPRACH on which physical layer processing is performed from the RU (e.g., an RU 220). For example, the transceiver 1410 may obtain a signal (e.g., a frequency domain signal) on which CP removal and FFT for received signals are performed.

Although not illustrated in FIG. 14A, the transceiver 1410 may further include a backhaul transceiver for being connected to a core network or another base station. The backhaul transceiver may provide an interface for performing communication with other nodes in a network. That is, the backhaul transceiver converts a bit sequence transmitted from the base station to another node, for example, another access node, another base station, an upper node, or a core network, into a physical signal, and converts the physical signal received from the another node into a bit sequence.

The memory 1420 stores data such as a basic program, an application program, and configuration information for an operation of the DU 210. The memory 1420 may be referred to as a storage unit. The memory 1420 may be configured as a volatile memory, a non-volatile memory, or a combination of a volatile memory and a non-volatile memory. The memory 1420 may provide stored data according to a request of the processor 1430.

The processor 1430 controls overall operations of the DU 210. The processor 1480 may be referred to as a control unit. For example, the processor 1430 transmits and receives a signal through the transceiver 1410 (or through a backhaul communication unit). In addition, the processor 1430 writes data to the memory 1420 and reads the data from the memory 1420. The processor 1430 may perform functions of a protocol stack required in a communication standard. Although only the processor 1430 is illustrated in FIG. 14A, according to another embodiment, a DU 210 may include two or more processors.

According to an embodiment, the processor 1430 may perform physical layer processing for received signals from the RU (e.g., the RU 220). For example, the processor 1430 may perform subcarrier demapping (RE demapping) for the received signals. For example, the processor 1430 may obtain a noise-interference component (e.g., a noise-interference covariance matrix) based on the received reference signals. In addition, for example, the processor 1430 may perform channel estimation based on the received reference signals. The processor 1430 may determine a weight for a reception combiner. The processor 1430 may determine data corresponding to an uplink signal.

The configuration of the DU 210 illustrated in FIG. 14A is only an example, and an example of a DU performing embodiments of the present disclosure is not limited to the configuration illustrated in FIG. 14A. In some embodiments, some configurations may be added, deleted, or changed.

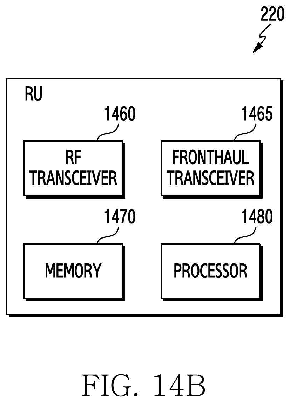

FIG. 14B illustrates a functional configuration of a wireless electronic device (e.g., the RU 220, or an MMU). Hereinafter, as the wireless electronic device, the RU 220 is exemplified, but at least a portion of descriptions described later may be applied to another wireless electronic device. The configuration illustrated in FIG. 11B may be understood as the configuration of the RU 220 of FIG. 2 as a portion of the base station. Terms such as '...unit' and '...device' used hereinafter mean a unit for processing at least one function or operation, and it may be implemented by hardware, software, or a combination of hardware and software.

Referring to FIG. 14B, the RU 220 includes an RF transceiver 1460, a fronthaul transceiver 1465, memory 1470, and a processor 1480.

The RF transceiver 1460 performs functions for transmitting and receiving a signal through a wireless channel. For example, the RF transceiver 1460 up-converts a baseband signal into an RF band signal and then transmits the RF band signal through an antenna, and down-converts the RF band signal received through the antenna into a baseband signal. For example, the RF transceiver 1460 may include a transmission filter, a reception filter, an amplifier, a mixer, an oscillator, a DAC, and an ADC.

The RF transceiver 1460 may include a plurality of transmission and reception paths. Furthermore, the RF transceiver 1460 may include an antenna unit. The RF transceiver 1460 may include at least one antenna array configured with a plurality of antenna elements. In terms of hardware, the RF transceiver 1460 may be configured as digital circuitry and analog circuitry (e.g., a radio frequency integrated circuit (RFIC)). Herein, the digital circuitry and the analog circuitry may be implemented as one package. In addition, the RF transceiver 1460 may include a plurality of RF chains. The RF transceiver 1460 may perform beamforming. The RF transceiver 1460 may apply a beamforming weight to a signal to provide directionality according to a configuration of the processor 1480 to the signal to be transmitted and received. According to an embodiment, the RF transceiver 1460 may include a plurality of antennas.

According to an embodiment, the RF transceiver 1460 may transmit and receive a signal on a radio access network. For example, the RF transceiver 1460 may transmit a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), or other system information (OSI)), a configuration message, control information, or downlink data, and the like. In addition, for example, the RF transceiver 1460 may receive an uplink signal. For example, the uplink signal may include a random access related signal (e.g., an NPRACH, or an NPUSCH). According to an embodiment, the RF transceiver 1460 may receive signals including a random access signal through the plurality of antennas included in the RF transceiver 1460. Although only the RF transceiver 1460 is illustrated in FIG. 14B, according to another embodiment, the RU 220 may include two or more RF transceivers.

The fronthaul transceiver 1465 may transmit and receive a signal. According to an embodiment, the fronthaul transceiver 1465 may transmit and receive a signal on a fronthaul interface. For example, the fronthaul transceiver 1465 may receive a management plane (M-plane) message. For example, the fronthaul transceiver 1465 may receive a management plane (S-plane) message. For example, the fronthaul transceiver 1465 may receive a control plane (C-plane) message. For example, the fronthaul transceiver 1465 may transmit a user plane (U-plane) message. For example, the fronthaul transceiver 1465 may receive a user plane message. According to an embodiment, the fronthaul transceiver 1465 may transmit, to the DU (e.g., the DU 210), a signal (e.g., a frequency domain signal) on which CP removal and FFT are performed. Although only the fronthaul transceiver 1465 is illustrated in FIG. 14B, according to another embodiment, the RU 220 may include two or more fronthaul transceivers.

The RF transceiver 1460 and the fronthaul transceiver 1465 transmit and receive a signal as described above. Accordingly, all or a portion of the RF transceiver 1460 and the fronthaul transceiver 1465 may be referred to as a communication unit, a transmission unit, a reception unit, or a transceiver unit. In addition, in the following description, transmission and reception performed through a wireless channel are used as a meaning including that processing as described above is performed by the RF transceiver 1460. In the following description, the transmission and the reception performed through the wireless channel are used as a meaning including that processing as described above is performed by the RF transceiver 1460.

The memory 1470 stores data such as a basic program, an application program, and configuration information for an operation of the RU 220. The memory 1470 may be referred to as a storage unit. The memory 1470 may be configured as a volatile memory, a non-volatile memory, or a combination of a volatile memory and a non-volatile memory. The memory 1470 may provide stored data according to a request of the processor 1480.

The processor 1480 controls overall operations of the RU 220. The processor 1480 may be referred to as a control unit. For example, the processor 1480 transmits and receives a signal through the RF transceiver 1460 or the fronthaul transceiver 1465. In addition, the processor 1480 writes data to the memory 1470 and reads the data from the memory 1470. The processor 1480 may perform functions of a protocol stack required in a communication standard. Although only the processor 1480 is illustrated in FIG. 14B, according to another embodiment, the RU 220 may include two or more processors. The processor 1480, which is a set of instructions or code stored in the memory 1470, may be instructions/code that are at least temporarily resided in the processor 1480, or a storage space storing the instructions/code, or a portion of circuitry configuring the processor 1480. In addition, the processor 1480 may include various modules for performing communication. The processor 1480 may control the RU 220 to perform operations according to embodiments described below.

The configuration of the RU 220 illustrated in FIG. 14B is only an example, and an example of an RU performing embodiments of the present disclosure is not limited to the configuration illustrated in FIG. 14B. In some embodiments, some configurations may be added, deleted, or changed.

In embodiments, an electronic device is provided. The electronic device may comprise at least one processor, and memory storing instructions. The instructions, when executed by the at least one processor, may cause the electronic device to obtain first uplink reference signals in a first symbol, obtain a first channel estimation result for the first symbol using the first uplink reference signals, obtain second uplink reference signals in a second symbol after the first symbol, determine a first communication quality metric using the first uplink reference signals and the first channel estimation result for the first symbol, determine a second communication quality metric using the second uplink reference signals and the first channel estimation result for the first symbol, and determine doppler spread information corresponding to a difference between the first communication quality metric and the second communication quality metric.

For example, the first communication quality metric may be determined in accordance with a difference between a first designated transmission signal for the first symbol and a first estimation signal using the first uplink reference signals and the first channel estimation result for the first symbol. The second communication quality metric may be determined in accordance with a difference between a second designated transmission signal for the second symbol and a second estimation signal using the second uplink reference signals and the first channel estimation result for the first symbol.

For example, the first communication quality metric may indicate a ratio between a magnitude of the first designated transmission signal and a magnitude of the difference between the first designated transmission signal and the first estimation signal. The second communication quality metric may indicate a ratio between a magnitude of the second designated transmission signal and a magnitude of the difference between the second designated transmission signal and the second estimation signal.

For example, the first communication quality metric may be determined in accordance with a following equation.
$evmSN {R}_{1} = \frac{E \left({\left|{C}_{1}\left(i\right)\right|}^{2}\right)}{E \left({\left|{C}_{1}\left(i\right)-FD{E}_{ou {t}_{1}}\left(i\right)\right|}^{2}\right)}$

*evmSNR*₁ may denote the first communication quality metric. *C*₁(*i*) may denote the first designated transmission signal in an i-th subcarrier. *FDE*_{*out*₁}(*i*) may denote the first estimation signal in the i-th subcarrier. The second communication quality metric may be determined in accordance with a following equation. $evmSN {R}_{2} = \frac{E \left({\left|{C}_{2}\left(i\right)\right|}^{2}\right)}{E \left({\left|{C}_{2}\left(i\right)-FD{E}_{ou {t}_{2}}\left(i\right)\right|}^{2}\right)}$

*evmSNR*₂ may denote the second communication quality metric. *C*₂(*i*) may denote the second designated transmission signal in the i-th subcarrier. *FDE*_{*out*₂}(*i*) may denote the second estimation signal in the i-th subcarrier.

For example, the first uplink reference signals may include demodulation reference signals (DMRSs) received through a plurality of antennas from a terminal on the first symbol and subcarriers of an uplink frequency region. The second uplink reference signals may include DMRSs received through the plurality of antennas from the terminal on the second symbol and the subcarriers of the uplink frequency region. The first channel estimation result for the first symbol may include a channel vector per subcarrier of the subcarriers on the first symbol.

For example,, for the i-th subcarrier, the first estimation signal may determined based on a reception signal corresponding to the i-th subcarrier among the first uplink reference signals and a channel vector corresponding to the i-th subcarrier from the first channel estimation result for the first symbol. For the i-th subcarrier, the second estimation signal may be determined based on a reception signal corresponding to the i-th subcarrier among the second uplink reference signals and a channel vector corresponding to the i-th subcarrier from the first channel estimation result for the first symbol.

For example, each of the first estimation signal and the second estimation signal may be determined based on following equations. $FD {E}_{out} \left(i\right) = \frac{{Y}_{Comb} \left(i\right)}{Norm \left(i\right)}$ ${Y}_{Comb} \left(i\right) = {\sum }_{rx}^{{N}_{rx} - 1} {w}_{rx} \left(i\right) ⋅ {Y}_{rx} \left(i\right)$
$Norm \left(i\right) = {\sum }_{rx}^{{N}_{rx} - 1} {w}_{rx} \left(i\right) ⋅ {h}_{rx} \left(i\right)$

*FDEₒᵤₜ*(*i*) may denote the first estimation signal or the second estimation signal. *Yᵣₓ*(*i*) may denote, in a case of the first estimation signal, the reception signal received from the i-th subcarrier through an rx-th antenna, among the first uplink reference signals, or in a case of the second estimation signal, the reception signal received from the i-th subcarrier, through the rx-th antenna, among the second uplink reference signals. h*ᵣₓ*(*i*) may denote a channel vector for the rx-th antenna on the i-th subcarrier among the first channel estimation result for the first symbol. *wᵣₓ*(*i*) may denote an equalization weight for the rx-th antenna on the i-th subcarrier. *Nᵣₓ* may indicate the number of the plurality of antennas.

For example, a sequence of the first designated transmission signal on the first symbol and a sequence of the second designated transmission signal on the second symbol may be determined at least one parameter of demodulation reference signal (DMRS) configuration information provided to the terminal through radio resource control (RRC) signaling.

For example, the electronic device may include a digital unit (DU). The first uplink reference signals may be received from a terminal through a radio unit (RU), as first in-phase/quadrature-phase (IQ) data of first demodulation reference signals (DMRSs) mapped on the first symbol. The second uplink reference signals may be received from the terminal through the RU, as second IQ data of second DMRSs mapped on the second symbol.

For example, the electronic device may include a radio unit (RU). The first uplink reference signals may be received through a plurality of antennas of the RU on the first symbol. The second uplink reference signals may be received through the plurality of antennas of the RU on the second symbol.

For example, the instructions, when executed by the at least one processor, may cause the electronic device to obtain a second channel estimation result for the second symbol using the second uplink reference signals, and obtain a channel estimation result for data symbols different from the first symbol and the second symbol, through the first channel estimation result for the first symbol, the second channel estimation result for the second symbol, and the doppler spread information.

For example, the instructions, when executed by the at least one processor, may cause the electronic device to determine the number of uplink reference symbols per slot in accordance with the doppler spread information, and transmit, to a terminal, a radio resource control (RRC) message including demodulation reference signal (DMRS) configuration information indicating the number of uplink reference symbols per slot.

For example, the difference between the first communication quality metric and the second communication quality metric may indicate the doppler spread information in accordance with a relationship function. The relationship function may be identified in accordance with the first communication quality metric among a plurality of relationship functions.

In embodiments, a method performed by an electronic device is provided. The method may comprise obtaining first uplink reference signals in a first symbol, obtaining a first channel estimation result for the first symbol using the first uplink reference signals, obtaining second uplink reference signals in a second symbol after the first symbol, determining a first communication quality metric using the first uplink reference signals and the first channel estimation result for the first symbol, determining a second communication quality metric using the second uplink reference signals and the first channel estimation result for the first symbol, and determining doppler spread information corresponding to a difference between the first communication quality metric and the second communication quality metric.

For example, the first communication quality metric may be determined in accordance with a difference between a first designated transmission signal for the first symbol and a first estimation signal using the first uplink reference signals and the first channel estimation result for the first symbol. The second communication quality metric may be determined in accordance with a difference between a second designated transmission signal for the second symbol and a second estimation signal using the second uplink reference signals and the first channel estimation result for the first symbol.

For example, the first communication quality metric may indicate a ratio between a magnitude of the first designated transmission signal and a magnitude of the difference between the first designated transmission signal and the first estimation signal. The second communication quality metric may indicate a ratio between a magnitude of the second designated transmission signal and a magnitude of the difference between the second designated transmission signal and the second estimation signal.

For example, a sequence of the first designated transmission signal on the first symbol and a sequence of the second designated transmission signal on the second symbol may be determined at least one parameter of demodulation reference signal (DMRS) configuration information provided to the terminal through radio resource control (RRC) signaling.

For example, the method may comprise obtaining a second channel estimation result for the second symbol using the second uplink reference signals, and obtaining a channel estimation result for data symbols different from the first symbol and the second symbol, through the first channel estimation result for the first symbol, the second channel estimation result for the second symbol, and the doppler spread information.

For example, the method may comprise determining the number of uplink reference symbols per slot in accordance with the doppler spread information, and transmitting, to a terminal, a radio resource control (RRC) message including demodulation reference signal (DMRS) configuration information indicating the number of uplink reference symbols per slot.

In embodiments, an electronic device is provided. The electronic device may comprise at least one processor, and memory storing instructions. The instructions, when executed by the at least one processor, may cause the electronic device to obtain first uplink reference signals in a first symbol, obtain second uplink reference signals in a second symbol after the first symbol, obtain a channel estimation result for the second symbol using the second uplink reference signals, determine a first communication quality metric using the first uplink reference signals and the channel estimation result, determine a second communication quality metric using the second uplink reference signals and the channel estimation result, and determine Doppler spread information corresponding to a difference between the first communication quality metric and the second communication quality metric.

In embodiments, an electronic device is provided. The electronic device may comprise at least one processor and at least one transceiver. The at least one processor may be configured to obtain first downlink reference signals in a first symbol through the at least one transceiver. The at least one processor may be configured to obtain a first channel estimation result for the first symbol using the first downlink reference signals. The at least one processor may be configured to obtain second downlink reference signals in a second symbol after the first symbol through the at least one transceiver. The at least one processor may be configured to determine a first communication quality metric using the first downlink reference signals and the first channel estimation result for the first symbol. The at least one processor may be configured to determine a second communication quality metric using the second downlink reference signals and the first channel estimation result for the first symbol. The at least one processor may be configured to determine Doppler spread information corresponding to a difference between the first communication quality metric and the second communication quality metric.

In embodiments, an electronic device is provided. The electronic device may comprise at least one processor and at least one transceiver. The at least one processor may be configured to obtain first uplink reference signals in a first symbol through the at least one transceiver. The at least one processor may be configured to obtain second uplink reference signals in a second symbol after the first symbol through the at least one transceiver. The at least one processor may be configured to obtain a channel estimation result for the second symbol using the second uplink reference signals. The at least one processor may be configured to determine a first communication quality metric using the first uplink reference signals and the channel estimation result. The at least one processor may be configured to determine a second communication quality metric using the second uplink reference signals and the channel estimation result. The at least one processor may be configured to determine Doppler spread information corresponding to a difference between the first communication quality metric and the second communication quality metric.

In embodiments, an electronic device is provided. The electronic device may comprise at least one processor, and memory storing instructions. The instructions, when executed by the at least one processor, may cause the electronic device to obtain first downlink reference signals in a first symbol, obtain a first channel estimation result for the first symbol using the first downlink reference signals, obtain second downlink reference signals in a second symbol after the first symbol, determine a first communication quality metric using the first downlink reference signals and the first channel estimation result for the first symbol, determine a second communication quality metric using the second downlink reference signals and the first channel estimation result for the first symbol, and determine Doppler spread information corresponding to a difference between the first communication quality metric and the second communication quality metric.

In embodiments, an electronic device is provided. The electronic device may comprise at least one processor, and memory storing instructions. The instructions, when executed by the at least one processor, may cause the electronic device to obtain first downlink reference signals in a first symbol, obtain second downlink reference signals in a second symbol after the first symbol, obtain a channel estimation result for the second symbol using the second downlink reference signals, determine a first communication quality metric using the first downlink reference signals and the channel estimation result, determine a second communication quality metric using the second downlink reference signals and the channel estimation result, and determine Doppler spread information corresponding to a difference between the first communication quality metric and the second communication quality metric.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device, comprising:
at least one processor; and
memory storing instructions that, when executed by the at least one processor, cause the electronic device to:
obtain first uplink reference signals in a first symbol,
obtain a first channel estimation result for the first symbol using the first uplink reference signals,
obtain second uplink reference signals in a second symbol after the first symbol,
determine a first communication quality metric using the first uplink reference signals and the first channel estimation result for the first symbol,
determine a second communication quality metric using the second uplink reference signals and the first channel estimation result for the first symbol, and
determine doppler spread information corresponding to a difference between the first communication quality metric and the second communication quality metric.

2. The electronic device of claim 1,
wherein the first communication quality metric is determined in accordance with a difference between a first designated transmission signal for the first symbol and a first estimation signal using the first uplink reference signals and the first channel estimation result for the first symbol, and
wherein the second communication quality metric is determined in accordance with a difference between a second designated transmission signal for the second symbol and a second estimation signal using the second uplink reference signals and the first channel estimation result for the first symbol.

3. The electronic device of claim 2,
wherein the first communication quality metric indicates a ratio between a magnitude of the first designated transmission signal and a magnitude of the difference between the first designated transmission signal and the first estimation signal, and
wherein the second communication quality metric indicates a ratio between a magnitude of the second designated transmission signal and a magnitude of the difference between the second designated transmission signal and the second estimation signal.

4. The electronic device of claim 3,
wherein the first communication quality metric is determined in accordance with a following equation: ${evmSNR}_{1} = \frac{E \left({\left|{C}_{1}\left(i\right)\right|}^{2}\right)}{E \left({\left|{C}_{1}\left(i\right)-{FDE}_{{out}_{1}}\left(i\right)\right|}^{2}\right)}$
*evmSNR*₁ denotes the first communication quality metric, *C*₁(*i*) denotes the first designated transmission signal in an i-th subcarrier, *FDE*_{*out*₁}(*i*) denotes the first estimation signal in the i-th subcarrier, and
wherein the second communication quality metric is determined in accordance with a following equation: ${evmSNR}_{2} = \frac{E \left({\left|{C}_{2}\left(i\right)\right|}^{2}\right)}{E \left({\left|{C}_{2}\left(i\right)-{FDE}_{{out}_{2}}\left(i\right)\right|}^{2}\right)}$
*evmSNR*₂ denotes the second communication quality metric, *C*₂(*i*) denotes the second designated transmission signal in the i-th subcarrier, *FDE*_{*out*₂}(*i*) denotes the second estimation signal in the i-th subcarrier.

5. The electronic device of claim 2,
wherein the first uplink reference signals include demodulation reference signals (DMRSs) received through a plurality of antennas from a terminal on the first symbol and subcarriers of an uplink frequency region,
wherein the second uplink reference signals include DMRSs received through the plurality of antennas from the terminal on the second symbol and the subcarriers of the uplink frequency region, and
wherein the first channel estimation result for the first symbol includes a channel vector per subcarrier of the subcarriers on the first symbol.

6. The electronic device of claim 5,
wherein, for the i-th subcarrier, the first estimation signal is determined based on a reception signal corresponding to the i-th subcarrier among the first uplink reference signals and a channel vector corresponding to the i-th subcarrier from the first channel estimation result for the first symbol, and
wherein, for the i-th subcarrier, the second estimation signal is determined based on a reception signal corresponding to the i-th subcarrier among the second uplink reference signals and a channel vector corresponding to the i-th subcarrier from the first channel estimation result for the first symbol.

7. The electronic device of claim 6,
wherein each of the first estimation signal and the second estimation signal is determined based on following equations: ${FDE}_{out} \left(i\right) = \frac{{Y}_{Comb} \left(i\right)}{Norm \left(i\right)}$ ${Y}_{Comb} \left(i\right) = {\sum }_{rx}^{{N}_{rx} - 1} {w}_{rx} \left(i\right) ⋅ {Y}_{rx} \left(i\right)$ $Norm \left(i\right) = {\sum }_{rx}^{{N}_{rx} - 1} {w}_{rx} \left(i\right) ⋅ {h}_{rx} \left(i\right)$
*FDEₒᵤₜ*(*i*) denotes the first estimation signal or the second estimation signal,
*Yᵣₓ*(*i*) denotes, in a case of the first estimation signal, the reception signal received from the i-th subcarrier through an rx-th antenna, among the first uplink reference signals, or in a case of the second estimation signal, the reception signal received from the i-th subcarrier, through the rx-th antenna, among the second uplink reference signals,
*hᵣₓ*(*i*) denotes a channel vector for the rx-th antenna on the i-th subcarrier among the first channel estimation result for the first symbol,
*wᵣₓ*(*i*) denotes an equalization weight for the rx-th antenna on the i-th subcarrier, and
*Nᵣₓ* indicates the number of the plurality of antennas.

8. The electronic device of claim 2,
wherein a sequence of the first designated transmission signal on the first symbol and a sequence of the second designated transmission signal on the second symbol are determined at least one parameter of demodulation reference signal (DMRS) configuration information provided to the terminal through radio resource control (RRC) signaling.

9. The electronic device of claim 1,
wherein the electronic device includes a digital unit (DU),
wherein the first uplink reference signals are received from a terminal through a radio unit (RU), as first in-phase/quadrature-phase (IQ) data of first demodulation reference signals (DMRSs) mapped on the first symbol, and
wherein the second uplink reference signals are received from the terminal through the RU, as second IQ data of second DMRSs mapped on the second symbol.

10. The electronic device of claim 1,
wherein the electronic device includes a radio unit (RU),
wherein the first uplink reference signals are received through a plurality of antennas of the RU on the first symbol, and
wherein the second uplink reference signals are received through the plurality of antennas of the RU on the second symbol.

11. The electronic device of claim 1, wherein the instructions, when executed by the at least one processor, cause the electronic device to:
obtain a second channel estimation result for the second symbol using the second uplink reference signals, and
obtain a channel estimation result for data symbols different from the first symbol and the second symbol, through the first channel estimation result for the first symbol, the second channel estimation result for the second symbol, and the doppler spread information.

12. The electronic device of claim 1, wherein the instructions, when executed by the at least one processor, cause the electronic device to:
determine the number of uplink reference symbols per slot in accordance with the doppler spread information, and
transmit, to a terminal, a radio resource control (RRC) message including demodulation reference signal (DMRS) configuration information indicating the number of uplink reference symbols per slot.

13. The electronic device of claim 1,
wherein the difference between the first communication quality metric and the second communication quality metric indicates the doppler spread information in accordance with a relationship function, and
wherein the relationship function is identified in accordance with the first communication quality metric among a plurality of relationship functions.

14. A method performed by an electronic device, the method comprising:
obtaining first uplink reference signals in a first symbol,
obtaining a first channel estimation result for the first symbol using the first uplink reference signals,
obtaining second uplink reference signals in a second symbol after the first symbol,
determining a first communication quality metric using the first uplink reference signals and the first channel estimation result for the first symbol,
determining a second communication quality metric using the second uplink reference signals and the first channel estimation result for the first symbol, and
determining doppler spread information corresponding to a difference between the first communication quality metric and the second communication quality metric.

15. The method of claim 14,
wherein the first communication quality metric is determined in accordance with a difference between a first designated transmission signal for the first symbol and a first estimation signal using the first uplink reference signals and the first channel estimation result for the first symbol,
wherein the second communication quality metric is determined in accordance with a difference between a second designated transmission signal for the second symbol and a second estimation signal using the second uplink reference signals and the first channel estimation result for the first symbol.
